# EUROPEAN PATENT SPECIFICATION

(11) **EP 2 148 384 B1**
(45) Date of publication and mention of the grant of the patent: **31.08.2011**
(21) Application number: 09009624.9
(22) Date of filing: 24.07.2009
(51) Int. Cl.: H01M 10/44, H01M 10/48

(54) **Battery system using secondary battery**
Batteriesystem, das eine Sekundärbatterie verwendet
Système de batterie utilisant une batterie secondaire

(30) Priority: 24.07.2008 JP 2008190916
(43) Date of publication of application: 27.01.2010
(73) Proprietor: Kabushiki Kaisha Toshiba, Minato-ku, Tokyo 105-8001 (JP)
(72) Inventor: Mizutani, Mami, Tokyo (JP); Morikawa, Ryuichi, Tokyo (JP); Monden, Yukitaka, Tokyo (JP); Kakuchi, Takeo, Tokyo (JP); Nakahama, Takafumi, Tokyo (JP)
(74) Representative: HOFFMANN EITLE

(56) References cited:
- US-A- 5 631 534
- US-A1- 2006 076 923
- US-B1- 6 511 764

## Description

### BACKGROUND OF THE INVENTION

### 1. Field of the Invention

The present invention relates to a battery system using secondary batteries, and particularly relates to a technology for controlling an energy balance among the secondary batteries.

### 2. Description of the Related Art

In general, in a battery system using secondary batteries connected in series, it is known that energies individually stored in each of the secondary batteries become unbalanced owing to variations in charge/discharge and temperature among the respective secondary batteries. When the energies individually stored in each of the secondary batteries become unbalanced, the battery system becomes incapable of performing efficient charge/discharge capable of making the most use of a function inherent therein.

In order to solve such a problem, Japanese Patent Laid-Open Publication No. H11-150877 (Patent Publication 1, published in 1999) discloses "Voltage Correction Circuit of Secondary Battery" for correcting a voltage difference owing to variations in amount of charge and amount of discharge among secondary batteries connected in series.

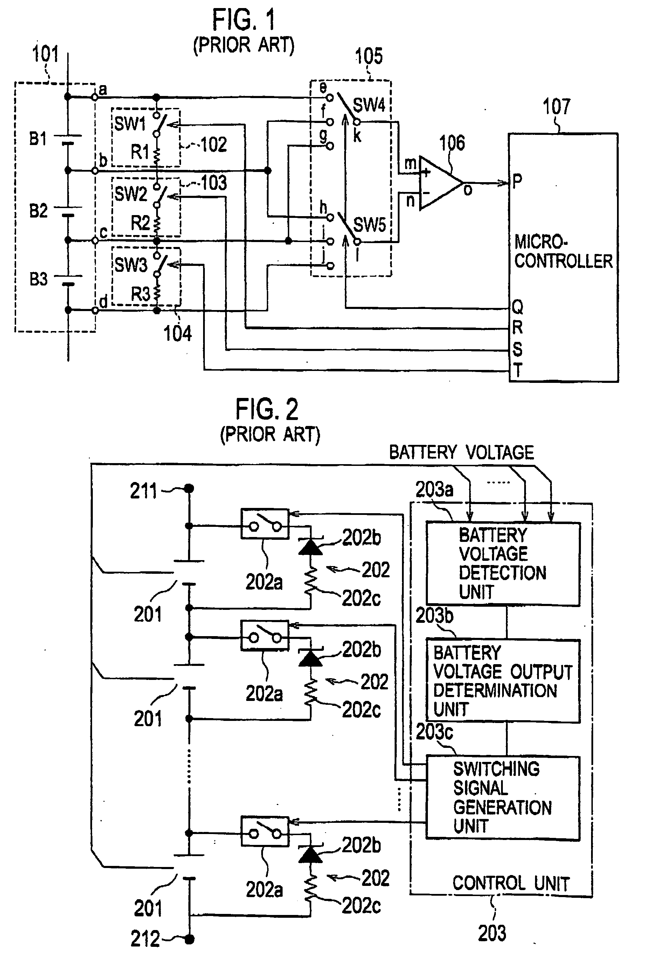

As shown in FIG. 1, this voltage correction circuit includes: on/off capable discharge circuits 102, 103 and 104 connected to both ends of secondary batteries B1, B2 and B3, respectively; and a microcontroller 107 that measures individual terminal voltages of the batteries B1, B2 and B3 through a switching circuit 105 and a differential amplifier 106. Then, based on a measurement result in the microcontroller 107, the voltage correction circuit determines a degree of variations in terminal voltage and a degree of variations in capacity among the batteries B1, B2 and B3. At this time, when the degree of variations in terminal voltage is large, the voltage correction circuit continues to turn on the discharge circuit connected to the secondary battery in which the terminal voltage exhibits the maximum value among the batteries B1, B2 and B3 until the terminal voltage drops down to a set value, and thereby performs voltage correction. Meanwhile, when the degree of variations in capacity is large, the voltage correction circuit maintains the discharge circuits in an off state regardless of the degree of variations in terminal voltage, and forbids to perform the voltage correction.

Moreover, Japanese Patent No. 3331201 (Patent Publication 2) discloses a battery voltage correction apparatus of an assembled battery, which is capable of reducing variations in voltage among secondary batteries, reducing a power consumption, and shortening a voltage correction operation time.

As shown in FIG. 2, this battery voltage correction apparatus of an assembled battery in which secondary batteries 201 are connected in series includes: discharge units 202 connected to both ends of each of the secondary batteries 201 and capable of turning on/off through current-carrying devices 202b which turn off at a predetermined voltage; and a control unit 203 that detects battery voltages, determines the secondary battery 201 required to be discharged, and sends an on signal to the discharge unit 202 thereof, thereby allows the discharge unit 202 to start the discharge.

### SUMMARY OF THE INVENTION

In the technology disclosed in Patent Publication 1 described above, the voltage correction circuit determines the variations in voltage or capacity among such cell batteries, and discharges the cell battery having high energy by using a discharge resistor. However, though voltage detection circuits and balancing circuits are used in combination in this voltage correction circuit, voltage values of the cell batteries, which are detected in the voltage detection circuits, are sometimes varied owing to operations of the balancing circuits. Therefore, there is a problem that the voltages of the cell batteries cannot be detected accurately.

Moreover, in the technology disclosed in Patent Publication 2, the assembled battery as a battery pack has a timing of ending the discharge, and discharges toward a voltage at the timing. However, in this technology, it is necessary to reduce the energy of the battery to none. Therefore, there is a problem that such a battery system can be only used in a restrictive manner.

It is an object of the present invention to provide a battery system usable for a general purpose by achieving energy balances among cell batteries and among module batteries composed of cell batteries based on accurate voltages of the cell batteries.

In order to solve the above-described problems, a first aspect of the present invention is a battery system in which module batteries, each of which includes cell batteries connected in series, are connected to one another, the battery system including: a battery management unit that manages states of the module batteries. Each of the module batteries includes: a cell voltage detection/inter-cell balancing circuit that detects a cell voltage of each of the cell batteries, sends the detected cell voltage as a cell voltage signal to the battery management unit, and balances energies among the cell batteries based on an inter-cell balance control signal sent from the battery management unit in response to the cell voltage signal; and an inter-module balancing circuit that balances energies among the module batteries based on an inter-module balance control signal sent from the battery management unit. The battery management unit includes: an inter-cell balance control circuit that, based on the cell voltage signals sent from the cell voltage detection/inter-cell balancing circuits of the module batteries, creates the inter-cell balance control signal for balancing the energies among the cell batteries in each of the module batteries, and sends the inter-cell balance control signal to the cell voltage detection/inter-cell balancing circuit in each of the module batteries; and an inter-module balance control circuit that, based on the cell voltage signals sent from the cell voltage detection/inter-cell balancing circuits of the module batteries, creates the inter-module balance control signal for balancing the energies among the module batteries, and sends the inter-module balance control signal to the inter-module balancing circuits in the module batteries.

In the battery system according to the first aspect of the present invention, preferably, each of the module batteries further includes a module management unit for sending, to the battery management unit, the cell voltage signals sent from the cell voltage detection/inter-cell balancing circuit, sending, to the cell voltage detection/inter-cell balancing circuit, the inter-cell balance control signal sent from the inter-cell balance control circuit of the battery management unit, thereby balancing the energies among the cell batteries, and sending, to the inter-module balancing circuit, the inter-module balance control signal sent from the inter-module balance control circuit of the battery management unit, thereby balancing the energies among the module batteries.

Moreover, in the battery system according to the first aspect of the present invention, each of the module batteries may further include: inter-cell discharge resistors, in each of which one end is connected to a voltage detection line drawn out from between ends of the adjacent cell batteries, and other end is connected to the cell voltage detection/inter-cell balancing circuit; inter-cell discharge switches, each of which is provided between the other ends of adjacent inter-cell discharge resistors in the inter-cell discharge resistors, and opens/closes in response to an inter-cell balancing discharge signal sent from the cell voltage detection/inter-cell balancing circuit; and a series circuit that is provided between a positive electrode of the cell battery held at a highest potential and a negative electrode of the cell battery held at a lowest potential among the cell batteries, and is composed of an inter-module discharge resistor and an inter-module discharge switch opening/closing in response to an inter-module balancing discharge signal sent from the inter-module balancing circuit.

Furthermore, in the battery system according to the first aspect of the present invention, each of the module batteries may further include: series circuits, each of which is provided between adjacent voltage detection lines among the voltage detection lines drawn out from both ends of each of the cell batteries and connected to the cell voltage detection/inter-cell balancing circuit, and is composed of an inter-cell discharge resistor and an inter-cell discharge switch opening/closing in response to an inter-cell balancing discharge signal from the cell voltage detection/inter-cell balancing circuit; and a series circuit that is provided between a positive electrode of the cell battery held at a highest potential and a negative electrode of the cell battery held at a lowest potential among the cell batteries, and is composed of an inter-module discharge resistor and an inter-module discharge switch opening/closing in response to an inter-module balancing discharge signal from the inter-module balancing circuit.

In such configurations as described above, the cell voltage detection/inter-cell balancing circuit of each of the module batteries may detect a maximum value and minimum value of the cell voltage of each of the cell batteries, and may send the detected maximum value and minimum value of the cell voltage, of each of the cell batteries as a cell voltage signal to the battery management unit. In a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit may create the inter-cell balance control signal for balancing the energies among the cell batteries in each of the module batteries, and may send the inter-cell balance control signal to the cell voltage detection/inter-cell balancing circuit in each of the module batteries. The cell voltage detection/inter-cell balancing circuit may send the inter-cell balance control signal, which is sent from the inter-cell balance control circuit, to the inter-cell discharge switch corresponding to the cell battery in which the maximum cell voltage is detected, thereby may discharge the corresponding cell battery.

Moreover, the cell voltage detection/inter-cell balancing circuit of each of the module batteries may detect a maximum value and minimum value of the cell voltage of each of the cell batteries, and may send the detected maximum value and minimum value of the cell voltage as a cell voltage signal to the battery management unit. In a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit may create the inter-cell balance control signal for balancing the energies among the cell batteries in each of the module batteries, and may send the inter-cell balance control signal to the cell voltage detection/inter-cell balancing circuit in each of the module batteries. The cell voltage detection/inter-cell balancing circuit may send the inter-cell balance control signal, which is sent from the inter-cell balance control circuit, alternately to the inter-cell discharge switches with odd ordinal numbers and the inter-cell discharge switches with even ordinal numbers, the inter-cell discharge switches with both of the ordinal numbers corresponding to all of the cell batteries in each of which the difference value between the maximum value and minimum value of the cell voltage is larger than the predetermined threshold value, thereby may discharge the corresponding cell batteries.

Furthermore, the cell voltage detection/inter-cell balancing circuit of each of the module batteries may detect a maximum value and minimum value of the cell voltage of each of the cell batteries, and may send the detected maximum value and minimum value of the cell voltage as a cell voltage signal to the battery management unit. In a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit may create the inter-cell balance control signal for balancing the energies among the cell batteries in each of the module batteries, and may send the inter-cell balance control signal to the cell voltage detection/inter-cell balancing circuit in each of the module batteries. The cell voltage detection/inter-cell balancing circuit may send the inter-cell balance control signal, which is sent from the inter-cell balance control circuit, to the inter-cell discharge switches corresponding to all of the cell batteries in each of which the difference value between the maximum value and minimum value of the cell voltage is larger than the predetermined threshold value, thereby may discharge the corresponding cell batteries.

Moreover, the cell voltage detection/inter-cell balancing circuit of each of the module batteries may discharge the cell batteries in response to the inter-cell balance control signal sent from the inter-cell balance control circuit during a period excluding a detection period of the cell voltage of each of the cell batteries.

Furthermore, the cell voltage detection/inter-cell balancing circuit of each of the module batteries may discharge the cell batteries in response to the inter-cell balance control signal sent from the inter-cell balance control circuit during a period excluding a detection period of the cell voltage of each of the cell batteries and predetermined margin periods before and after the detection period.

Moreover, the cell voltage detection/inter-cell balancing circuit of each of the module batteries may detect a maximum value and minimum value of the cell voltage of each of the cell batteries, and may send the detected maximum value and minimum value of the cell voltage as a cell voltage signal to the battery management unit. In a case where a difference value between the minimum value of the cell voltage indicated by the cell voltage signal sent from the cell voltage detection/inter-cell balancing circuit of each of the module batteries and a minimum value of the cell voltages indicated by the cell voltage signals sent from the cell voltage detection/inter-cell balancing circuits of all of the module batteries is larger than a predetermined threshold value, the inter-module balance control circuit of the battery management unit may create the inter-module balance control signal for balancing the energies among the module batteries, and may send the inter-module balance control signal to the inter-module balancing circuits in the corresponding module batteries. The inter-module balancing circuit may send the inter-module balance control signal, which is sent from the inter-module balance control circuit, to the inter-module discharge switch, thereby may discharge the corresponding module battery.

Furthermore, the inter-module balancing circuit may send the inter-module balance control signal, which is sent from the inter-module balance control circuit, to the inter-module discharge switch independently of a detection period of the cell voltage of each of the cell batteries in the cell voltage detection/inter-cell balancing circuit of each of the module batteries, thereby may discharge the corresponding module battery.

A second aspect of the present invention is a battery system in which module batteries, each of which includes cell batteries connected in series, are connected to one another, wherein each of the module batteries includes: a cell voltage detection/inter-cell balancing circuit that detects a cell voltage of each of the cell batteries to then create a cell voltage signal, and balances energies among the cell batteries based on the created cell voltage signal; and an inter-module balancing circuit that balances energies among the module batteries based on a module voltage obtained by summing up the cell voltages of the cell batteries.

In accordance with each of the aspects of the present invention, there can be provided the battery system usable for the general purpose by achieving the energy balances among the cell batteries and among the module batteries composed of the cell batteries based on the accurate voltages of the cell batteries.

### BRIEF DESCRIPTION OF THE DRAWINGS

FIG. 1 is a view for explaining a conventional battery system.
FIG. 2 is a view for explaining another conventional battery system.
FIG. 3 is a block diagram showing a configuration of a battery system according to Embodiment 1 of the present invention.
FIG. 4 is a block diagram showing a configuration of a battery system according to Embodiment 2 of the present invention.
FIG. 5 is a block diagram showing a configuration of a battery system according to Embodiment 3 of the present invention.
FIG. 6 is a block diagram showing a configuration of a module battery for use in a battery system according to Embodiment 4 of the present invention.
FIG. 7 is a block diagram showing a configuration of a module battery for use in a battery system according to Embodiment 5 of the present invention.
FIG. 8 is a block diagram showing a configuration of a battery system according to Embodiment 6 of the present invention.
FIG. 9 is a flowchart showing operations of an inter-cell balance control circuit of the battery system according to Embodiment 6 of the present invention.
FIG. 10 is a flowchart showing operations of a cell voltage detection/inter-cell balancing circuit of the battery system according to Embodiment 6 of the present invention.
FIG. 11 is a flowchart showing operations of a cell voltage detection/inter-cell balancing circuit of a battery system according to Embodiment 7 of the present invention.
FIG. 12 is a flowchart showing operations of a cell voltage detection/inter-cell balancing circuit of a battery system according to Embodiment 8 of the present invention.
FIG. 13 is a timing chart for explaining operations of a battery system according to Embodiment 9 of the present invention.
FIG. 14 is a timing chart for explaining operations of a battery system according to Embodiment 10 of the present invention.
FIG. 15 is a flowchart showing operations of an inter-module balance control circuit of a battery system according to Embodiment 11 of the present invention.
FIG. 16 is a flowchart showing operations of an inter-module balancing circuit of the battery system according to Embodiment 11 of the present invention.
FIG. 17 is a timing chart for explaining operations of a battery system according to Embodiment 12 of the present invention.

### DETAILED DESCRIPTION OF THE EMBODIMENTS

A description will be made below in detail of embodiments of the present invention while referring to the drawings.

### (Embodiment 1)

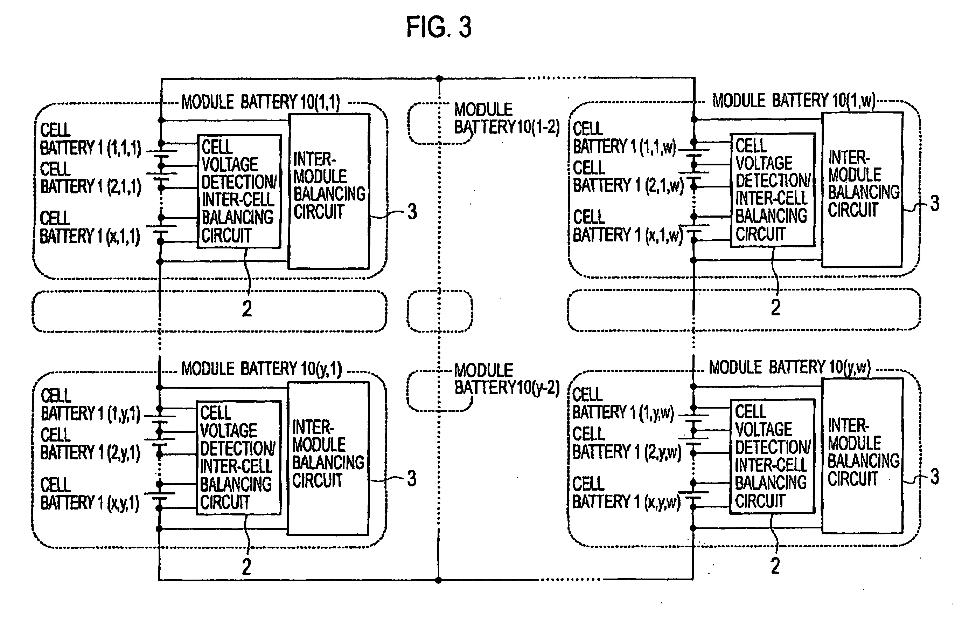

In a configuration of a battery system according to Embodiment 1 of the present invention, which is shown in FIG. 3, y (y is an integer of two or more) pieces of module batteries 10, each of which includes x (x is an integer of two or more) pieces of cell batteries 1 connected in series, are connected in series, and the y pieces of module batteries 10 connected in series are connected in parallel in w (w is an integer of one or more) pieces of columns.

Each of the y×w pieces of module batteries 10 has the same configuration. The module battery 10 includes: the x pieces of cell batteries 1 connected in series; a cell voltage detection/inter-cell balancing circuit 2; and an inter-module balancing circuit 3.

The cell voltage detection/inter-cell balancing circuit 2 is connected to a positive electrode and negative electrode of each of the x pieces of cell batteries 1. Then, the cell voltage detection/inter-cell balancing circuit 2 detects a voltage of each of the cell batteries 1 (hereinafter, referred to as a "cell voltage") to then create a cell voltage signal, and discharges the cell battery 1 indicated to have higher energy than the other cell batteries 1 by the created cell voltage signal. In such a way, an inter-cell balance control to balance energies among the x pieces of cell batteries 1 is performed.

The inter-module balancing circuit 3 is connected between a positive electrode of the cell battery 1 held at the highest potential and a negative electrode of the cell battery 1 held at the lowest potential. In the case where a voltage obtained by summing up voltages generated in the x pieces of cell batteries 1 (hereinafter, referred to as a "module voltage") is higher than module voltages of the other module batteries 10, the inter-module balancing circuit 3 discharges the module battery 10 concerned. In this case, the inter-module balancing circuit 3 discharges the x pieces of cell batteries 1 connected in series as a whole. In such a way, an inter-module balance control to balance energies among the y×w pieces of module batteries 10 is performed.

A configuration is assumed, in which only the cell voltage detection/inter-cell balancing circuit 2 is provided for each of the module batteries 10, that is, in which the inter-module balancing circuit 3 is not provided therefor. In this case, though the inter-cell balance can be controlled for each of the module batteries 10, the energies among the module batteries 10 cannot be balanced. In order to solve such a problem, the battery system according to Embodiment 1 includes the inter-module balancing circuit 3 for each of the module batteries 10.

As described above, in accordance with the battery system according to Embodiment 1 of the present invention, both of an energy balance among the cell batteries and an energy balance among the module batteries are controlled. Accordingly, an energy balance in a whole of the battery system can be achieved.

Moreover, in accordance with the battery system according to Embodiment 1 of the present invention, the discharge of the cell batteries 1 by the cell voltage detection/inter-cell balancing circuit 2 and the discharge of the module batteries 10 by the inter-module balancing circuit 3 (that is, the discharge of the x pieces of cell batteries 1 connected in series as a whole) are performed simultaneously. Accordingly, a discharge time for balancing the energy in the battery system is shortened.

### (Embodiment 2)

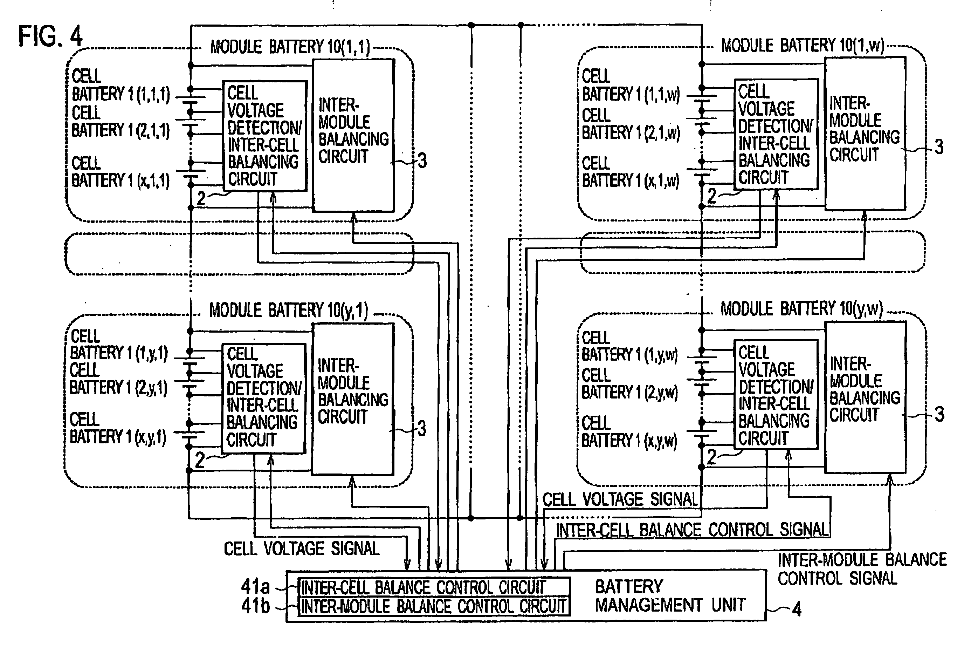

A configuration of a battery system according to Embodiment 2 of the present invention, which is shown in FIG. 4, is one in which a battery management unit 4 is added to the battery system according to Embodiment 1 mentioned above.

Each of the cell voltage detection/inter-cell balancing circuits 2 is provided for each of x×y pieces of the module batteries 10, and is connected to the positive electrode and negative electrode of each of the x pieces of cell batteries 1. Then, the cell voltage detection/inter-cell balancing circuit 2 detects the cell voltage generated in each of the cell batteries 1, and sends the detected cell voltage as the cell voltage signal to the battery management unit 4. Moreover, the cell voltage detection/inter-cell balancing circuit 2 performs the inter-cell balance control to balance the energies among the cell batteries 1 based on an inter-cell balance control signal sent from the battery management unit 4 in response to the cell voltage signal

Each of the inter-module balancing circuits 3 performs the inter-module balance control to balance the energies among the yxw pieces of module batteries 10 based on inter-module balance control signal sent from the battery management unit 4.

The battery management unit 4 manages states of the x×y pieces of module batteries 10 in a centralized manner, and performs the inter-cell balance control and the inter-module balance control. The battery management unit 4 includes an inter-cell balance control circuit 41a, and an inter-module balance control circuit 41b.

The inter-cell balance control circuit 41a creates inter-cell balance control signals based on the cell voltage signals sent from the cell voltage detection/inter-cell balancing circuits 2 of the y×w pieces of module batteries 10. Then, the inter-cell balance control signals are sent to the cell voltage detection/inter-cell balancing circuits 2 in the respective module batteries 10 in order to balance the energies among the cell batteries 1 in each of the module batteries 10.

The inter-module balance control circuit 41b creates inter-module balance control signals based on the cell voltage signals sent from the cell voltage detection/inter-cell balancing circuits 2 of the y×w pieces of module batteries 10. Then, the inter-module balance control signals are sent to the inter-module balancing circuits 3 in the y×w pieces of module batteries 10 in order to balance the energies among the y×w pieces of module batteries 10.

As described above, in accordance with the battery system according to Embodiment 2 of the present invention, the battery management unit 4 controls the energy balance among the cell batteries 1 and the energy balance among the module batteries 10. In such a way, the whole of the battery system is managed and controlled in the centralized manner. Therefore, in addition to the effect obtained by the battery system according to Embodiment 1 mentioned above, the control of the energy balance in the whole of the battery system is performed efficiently.

### (Embodiment 3)

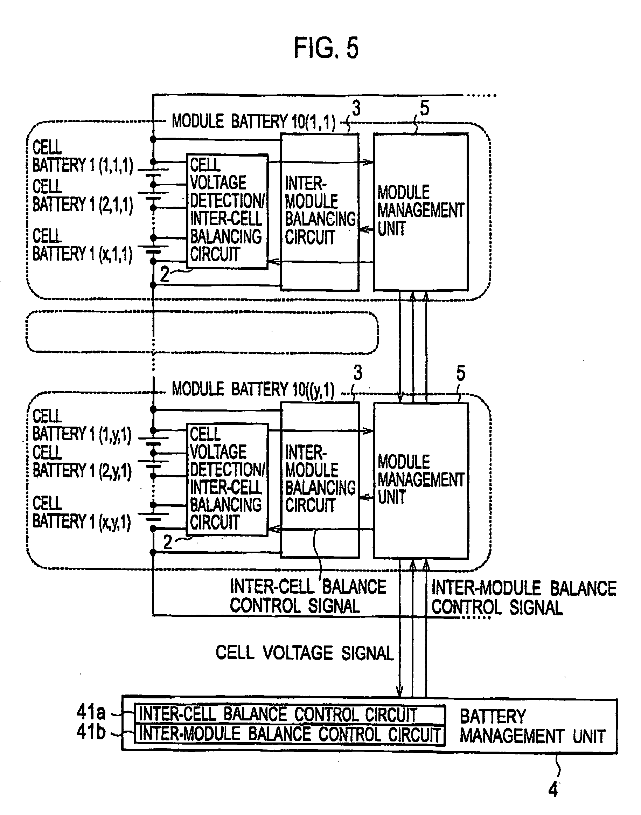

A configuration of a battery system according to Embodiment 3 of the present invention, which is shown in FIG. 5, is one in which a module management unit 5 is added to each of the x×y pieces of module batteries 10 of the battery system according to embodiment 2.

Each of the module management units 5 is composed of, for example, a circuit including a CPU disposed on a board, an IC having a communication function and a control function, or the like. The module management unit 5 controls the whole of the module battery 10 in the centralized manner. Specifically, the module management unit 5 sends the cell voltage signals, which are sent from the cell voltage detection/inter-cell balancing circuit 2, to the battery management unit 4, and sends the inter-cell balance control signal, which is sent from the battery management unit 4, to the cell voltage detection/inter-cell balancing circuit 2, thereby balances the energies among the cell batteries 1. Moreover, the module management unit 5 sends the inter-module balance control signal, which is sent from the battery management unit 4, to the inter-module balancing circuit 3, thereby balances the energies among the module batteries 10.

As described above, in accordance with the battery system according to Embodiment 3 of the present invention, the module management unit 5 provided in each of the x×y pieces of module batteries 10 controls the module battery 10 in the centralized manner. Therefore, in addition to the effect obtained by the battery system according to Embodiment 2, the battery system according to Embodiment 3 of the present invention can perform a more efficient control.

### (Embodiment 4)

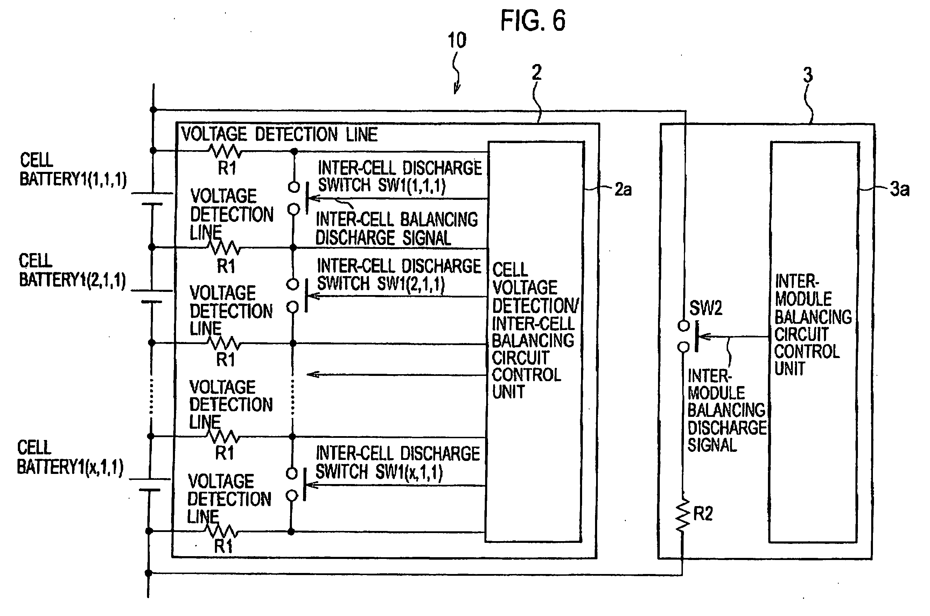

A battery system according to Embodiment 4 of the present invention, which is shown in FIG. 6, is one that specifically defines main portions of the cell voltage detection/inter-cell balancing circuits 2 and inter-module balancing circuits 3 of the battery system according to either of Embodiment 2 or Embodiment 3.

The cell voltage detection/inter-cell balancing circuit 2 includes: a cell voltage detection/inter-cell balancing circuit control unit 2a; inter-cell discharge resistors R1, in each of which one end is connected to a voltage detection line drawn out from between ends of the adjacent cell batteries 1 of which number of pieces is x, and the other end is connected to the cell voltage detection/inter-cell balancing circuit control unit 2a; and inter-cell discharge switches SW1, each of which is provided between the other ends of the adjacent inter-cell discharge resistors R1.

Each of the inter-cell discharge resistors R1 has a function to prevent an increase of a short-circuit current in the case where the voltage detection line is short-circuited. Each of the inter-cell discharge switches SW1 opens/closes in response to an inter-cell balancing discharge signal sent from the cell voltage detection/inter-cell balancing circuit control unit 2a. The cell voltage detection/inter-cell balancing circuit control unit 2a creates the inter-cell balancing discharge signal, which instructs the discharge of the cell battery 1, in response to the inter-cell balance control signal from the battery management unit 4 (in the case of the battery system according to Embodiment 2) or from the module management unit 5 (in the case of the battery system according to Embodiment 3), and sends the created inter-cell balancing discharge signal to each of the inter-cell discharge switches SW1.

In the cell voltage detection/inter-cell balancing circuit 2 configured as described above, the cell voltage detection/inter-cell balancing circuit control unit 2a sends the inter-cell balancing discharge signal to the corresponding cell battery 1 outputting a high voltage among the x pieces of cell batteries 1. In such a way, the inter-cell discharge switch SW1 that has received the sent inter-cell balancing discharge signal is closed. As a result, a current flows through such a route starting from the corresponding cell battery 1, passing through the inter-cell discharge resistor R1, the inter-cell discharge switch SW1 and another inter-cell discharge resistor R1, and returning to the corresponding cell battery 1, and the corresponding cell battery 1 is thereby discharged. By the above operations, the cell battery 1 having high energy is discharged so that the energies among the x pieces of cell batteries 1 can be balanced.

The inter-module balancing circuit 3 includes: a series circuit composed of an inter-module discharge switch SW2 and an inter-module discharge resistor R2, which are provided between the positive electrode of the highest-potential cell battery 1 and the negative electrode of the lowest-potential cell battery 1 among the x pieces of cell batteries; and an inter-module balancing circuit control unit 3a. The inter-module discharge switch SW2 opens/closes in response to an inter-module balancing discharge signal from the inter-module balancing circuit control unit 3a. The inter-module balancing circuit control unit 3a creates the inter-module balancing discharge signal, which instructs the discharge of the x pieces of cell batteries 1, in response to the inter-module balance control signal from the battery management unit 4 (in the case of the battery system according to Embodiment 2) or from the module management unit 5 (in the case of the battery system according to Embodiment 3), and sends the created inter-module balancing discharge signal to the inter-module discharge switch SW2.

In the inter-module balancing circuit 3 configured as described above, the inter-module discharge switch SW2 is closed in the case of having received the inter-module balancing discharge signal sent from the inter-module balancing circuit control unit 3a. As a result, a current flows through such a route starting from the x pieces of cell batteries 1, passing through the inter-module discharge switch SW2 and the inter-module discharge resistor R2, and returning to the x pieces of cell batteries 1, and the x pieces of cell batteries are thereby discharged as a whole. By the above operations, the module battery 10 having high energy is discharged so that the energies among the y×w pieces of module batteries 10 can be balanced.

As described above, in accordance with the battery system according to Embodiment 4 of the present invention, similar effects to those of the battery systems according to Embodiment 1 to Embodiment 3 are obtained with higher efficiency.

### (Embodiment 5)

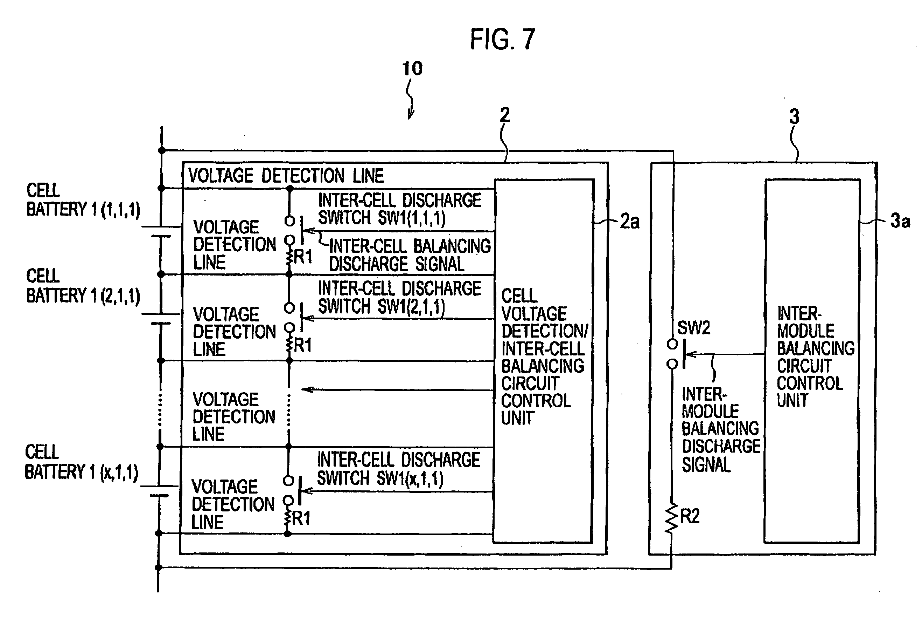

A battery system according to Embodiment 5 of the present invention, which is shown in FIG. 7, is one that specifically defines the main portions of the cell voltage detection/inter-cell balancing circuits 2 and inter-module balancing circuits 3 of the battery system according to either of Embodiment 2 or Embodiment 3.

The cell voltage detection/inter-cell balancing circuit 2 includes: the cell voltage detection/inter-cell balancing circuit control unit 2a; and series circuits, each of which is provided between the adjacent voltage detection lines drawn out from both ends of the x pieces of cell batteries 1, and is composed of the inter-cell discharge switch SW1 that opens/closes in response to the inter-cell balancing discharge signal from the cell voltage detection/inter-cell balancing circuit control unit 2a, and of the inter-cell discharge resistor R1.

Each of the inter-cell discharge resistors R1 has the function to prevent the increase of the short-circuit current in the case where the voltage detection line is short-circuited. Each of the inter-cell discharge switches SW1 opens/closes in response to the inter-cell balancing discharge signal sent from the cell voltage detection/inter-cell balancing circuit control unit 2a. The cell voltage detection/inter-cell balancing circuit control unit 2a creates the inter-cell balancing discharge signal, which instructs the discharge of the cell battery 1, in response to the inter-cell balance control signal from the battery management unit 4 (in the case of the battery system according to Embodiment 2) or from the module management unit 5 (in the case of the battery system according to Embodiment 3), and sends the created inter-cell balancing discharge signal to the inter-cell discharge switch SW1.

In the cell voltage detection/inter-cell balancing circuit 2 configured as described above, the cell voltage detection/inter-cell balancing circuit control unit 2a sends the inter-cell balancing discharge signal to the corresponding cell battery 1 outputting a high voltage among the x pieces of cell batteries 1. In such a way, the inter-cell discharge switch SW1 that has received the inter-cell balancing discharge signal sent from the cell voltage detection/inter-cell balancing circuit control unit 2a is closed. As a result, a current flows through such a route starting from the corresponding cell battery 1, passing through the inter-cell discharge switch SW1 and the inter-cell discharge resistor R1, and returning to the corresponding cell battery 1, and the corresponding cell battery 1 is thereby discharged. By the above operations, the cell battery 1 having high energy is discharged so that the energies among the x pieces of cell batteries 1 can be balanced.

The inter-module balancing circuit 3 includes: a series circuit that is provided between the positive electrode of the cell battery 1 held at the highest potential and the negative electrode of the cell battery 1 held at the lowest potential among the x pieces of cell batteries, and is composed of the inter-module discharge switch SW2 and the inter-module discharge resistor R2; and the inter-module balancing circuit control unit 3a. The inter-module discharge switch SW2 opens/closes in response to the inter-module balancing discharge signal from the inter-module balancing circuit control unit 3a. The inter-module balancing circuit control unit 3a creates the inter-module balancing discharge signal, which instructs the discharge of the x pieces of cell batteries 1, in response to the inter-module balance control signal from the battery management unit 4 (in the case of the battery system according to Embodiment 2) or from the module management unit 5 (in the case of the battery system according to Embodiment 3), and sends the created inter-module balancing discharge signal to the inter-module discharge switch SW2.

In the inter-module balancing circuit 3 configured as described above, the inter-module discharge switch SW2 is closed in the case of having received the inter-module balancing discharge signal sent from the inter-module balancing circuit control unit 3a. As a result, a current flows through such a route starting from the x pieces of cell batteries 1, passing through the inter-module discharge switch SW2 and the inter-module discharge resistor R2, and returning to the x pieces of cell batteries 1, and the x pieces of cell batteries are thereby discharged as a whole. By the above operations, the module battery 10 having high energy is discharged so that the energies among the y×w pieces of module batteries 10 can be balanced.

As described above, in accordance with the battery system according to Embodiment 5 of the present invention, similar effects to those of the battery systems according to Embodiment 1 to Embodiment 3 are obtained with higher efficiency.

### (Embodiment 6)

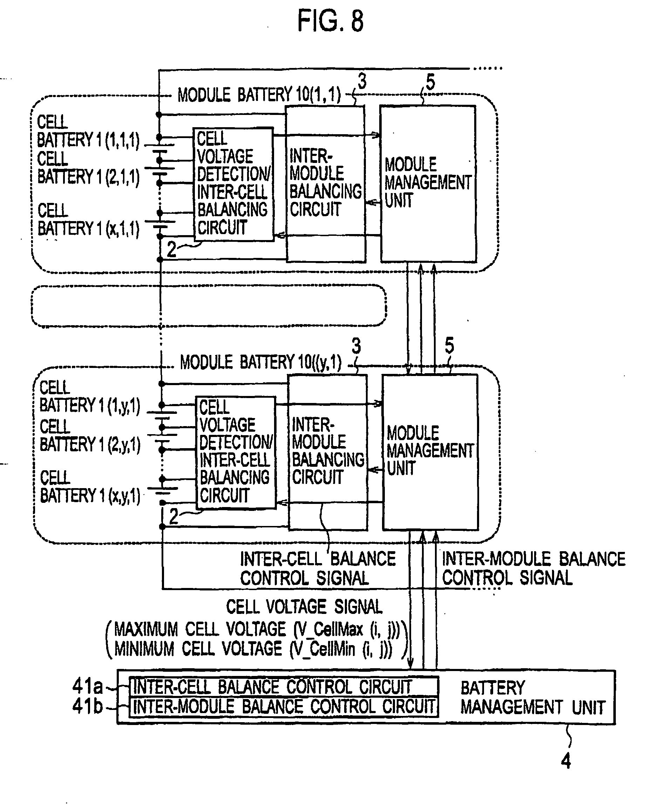

A battery system according to Embodiment 6 of the present invention, which is shown in FIG. 8, is the battery system according to Embodiment 3 mentioned above, in which the module management unit 5 included in each of the module batteries 10 sends a maxim cell voltage v_CellMax and a minimum cell voltage V_CellMin as the cell voltage signals to the battery management unit 4.

In the case where there is a difference value of ΔVCellB or more between the maxim cell voltage V_CellMax and minimum cell voltage V_CellMin of the cell batteries 1 in the module battery 10, the battery management unit 4 transmits the inter-cell balance control signal to the module battery 10 concerned.

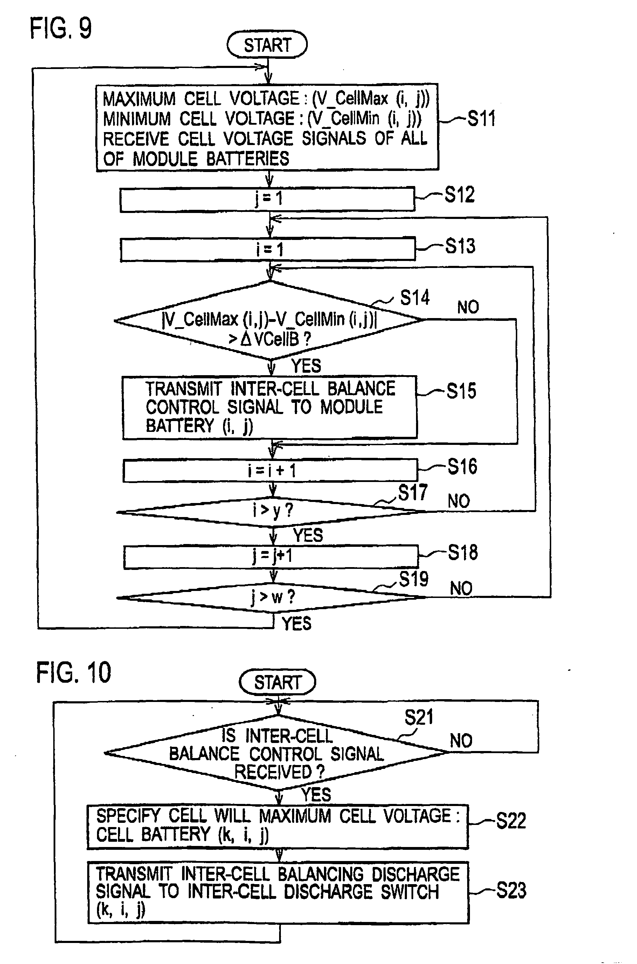

Next, a description will be made of operations of the battery system according to Embodiment 6, which is configured as described above. First, a description will be made of operations of the inter-cell balance control circuit 41a included in the battery management unit 4 while referring to a flowchart shown in FIG. 9.

First, the inter-cell balance control circuit 41a receives the cell voltage signals from all of the module batteries 10 (Step S11). Specifically, the inter-cell balance control circuit 41a receives the cell voltage signals including the maximum cell voltages V_CellMax (i, j) and the minimum cell voltages V_CellMin (i, j) from the y×w pieces of module batteries 10. Here, the variable i is equal to 1, 2..., and y, and the variable j is equal to 1, 2..., and w.

Subsequently, the variable j is initialized to "1" (Step S12). Subsequently, the variable i is initialized to "1" (Step S13). Subsequently, it is investigated whether or not an absolute value of the difference between the maximum cell voltage v_cellMax (i, j) and the minimum cell voltage V_CellMin (i, j) is larger than such a threshold value ΔVCellB (Step S14). When it is determined in Step S14 that the absolute value of the difference between the maximum cell voltage V_CellMax (i, j) and the minimum cell voltage V-CellMin (i, j) is larger than the threshold value ΔVCellB, the inter-cell balance control signal is transmitted to the module battery (i, j) (Step S15). When it is determined in Step S14 that the absolute value of the difference between the maximum cell voltage V_CellMax (i, j) and the minimum cell voltage v_CellMin (i, j) is not larger than the predetermined threshold value ΔVCellB, such processing of Step S15 is skipped.

Subsequently, the variable i is incremented (+1) (Step S16). Subsequently, it is investigated whether or not the variable i has become larger than y, that is, whether or not the processing for the y pieces of module batteries 10 connected in series is ended (Step S17). When it is determined that the variable i has not become larger than y in Step S17, the operations return to Step S14, and the above-described processing is repeated.

Meanwhile, when it is determined that the variable i has become larger than y in Step S17, the variable j is subsequently incremented (+1) (Step S18). Subsequently, it is investigated whether or not the variable j has become larger than w, that is, whether or not the processing for the w pieces of module batteries 10 connected in parallel is ended (Step S19). When it is determined that the variable j has not become larger than w in Step S19, the operations return to Step S13, and the above-described processing is repeated. Meanwhile, when it is determined that the variable j has become larger than w in Step S19, the operations return to Step S11, and the above-described processing is repeated.

Next, a description will be made of operations of each of the cell voltage detection/inter-cell balancing circuits 2 while referring to a flowchart shown in FIG. 10. In the cell voltage detection/inter-cell balancing circuit 2, it is first investigated whether or not the inter-cell balance control signal has been received thereby (Step S21). When it is determined that the inter-cell balance control signal has not been received in Step S21, the cell voltage detection/inter-cell balancing circuit 2 stands by while repeatedly executing Step S21.

When it is determined that the inter-cell balance control signal has been received in such a standby state where Step S21 is repeatedly executed, the maximum voltage cell is specified (Step S22). The cell battery specified in step S22 is represented as a "cell battery (k, i, j)". Here, the variable k is equal to 1, 2..., and x. Subsequently, the inter-cell balancing discharge signal is transmitted to an inter-cell discharge switch (k, i, j) (Step S23). Specifically, the inter-cell balancing discharge signal is sent to the inter-cell discharge switch SW1 (k, i, j) provided to correspond to the cell battery 1 (k, i, j). In such a way, the cell battery 1 (k, i, j) is discharged.

As described above, the discharge of the cell batteries 1 having the maximum voltages among the cell batteries 1 in each of the module batteries 10 sequentially goes on by the processing of the inter-cell balance control circuit 41a and the cell voltage detection/inter-cell balancing circuit 2, whereby the x pieces of cell batteries 1 are finally made to converge on the minimum cell voltage V_CellMin. As a result, the energies among the cell batteries 1 in each of the module batteries 10 are balanced. In such a way, the energy in the battery system is balanced.

Note that the battery system according to Embodiment 6 described above is the battery system according to Embodiment 3 mentioned above, which is configured so that the module management unit 5 included in each of the module batteries 10 can send the maxim cell voltage V_CellMax and the minimum cell voltage V_CellMin as the cell voltage signals to the battery management unit 4. However, the battery system according to Embodiment 6 may be the battery system according to Embodiment 2, which is configured so that the cell voltage detection/inter-cell balancing circuit 2 included in each of the module batteries 10 can send the maxim cell voltage V_CellMax and the minimum cell voltage V_CellMin as the cell voltage signals to the battery management unit 4.

### (Embodiment 7)

A configuration of a battery system according to Embodiment 7 of the present invention is the same as the configuration of the battery system according to Embodiment 6 mentioned above; however, the battery system according to Embodiment 7 is different from the battery system according to Embodiment 6 only in operations of each of the cell voltage detection/inter-cell balancing circuits 2. A description will be mainly made below of portions different from those of the battery system according to Embodiment 6.

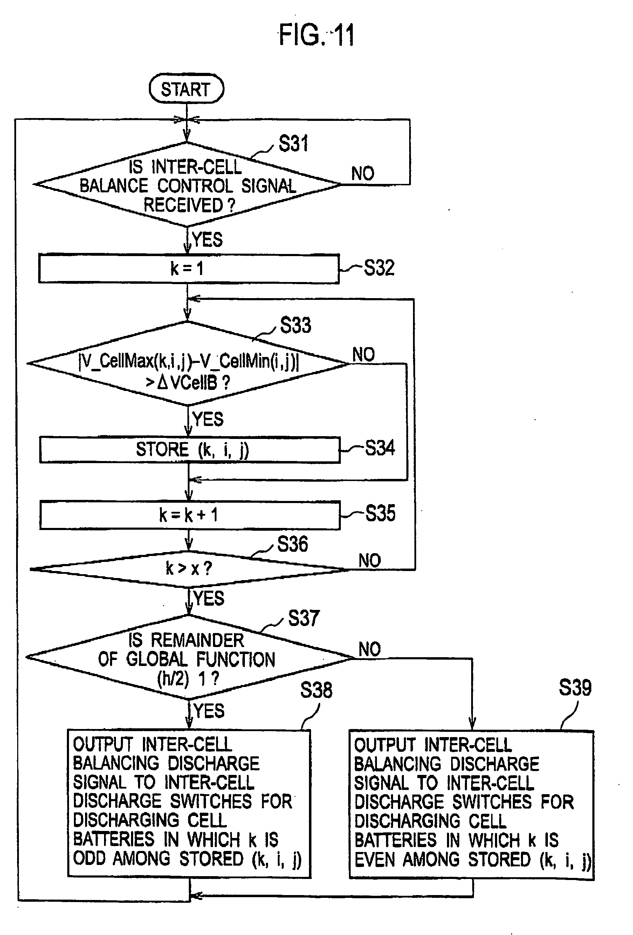

FIG. 11 is a flowchart showing the operations of each of the cell voltage detection/inter-cell balancing circuits 2 of the battery system according to Embodiment 7 of the present invention.

First, the cell voltage detection/inter-cell balancing circuit 2 investigates whether or not to have received the inter-cell balance control signal (Step S31). When it is determined that the inter-cell balance control signal has not been received in Step S31, the cell voltage detection/inter-cell balancing circuit 2 stands by while repeatedly executing Step S31.

When it is determined that the inter-cell balance control signal has been received in a standby state where Step S31 is repeatedly executed, the variable k is initialized to "1" (Step S32). Here, the variable k is equal to 1, 2..., and x. Subsequently, it is investigated whether or not an absolute value of a difference between a voltage V_Cell (k, i, j) of the cell battery 1 and the minimum cell voltage V_CellMin (i, j) thereof is larger than the predetermined threshold value ΔVCellB (Step S33).

When it is determined in Step S33 that the absolute value of the difference between the voltage V_Cell (k, i, j) of the cell battery 1 and the minimum cell voltage V_CellMin (i, j) thereof is larger than the predetermined threshold value ΔVCellB, data (k, i, j) for specifying the cell battery 1 concerned is stored (Step S34). Meanwhile, when it is determined in Step S33 that the absolute value of the difference between the voltage V_Cell (k, i, j) of the cell battery 1 and the minimum cell voltage V_CellMin (i, j) thereof is not larger than the predetermined threshold value ΔVCellB, such processing of Step S34 is skipped.

Subsequently, the variable k is incremented (+1) (Step S35). Subsequently, it is investigated whether or not the variable k has become larger than x (Step S36). When it is determined that the variable k has not become larger than x in Step S36, the operations return to Step S33, and the above-described processing is repeated.

Meanwhile, when it is determined that the variable k has become larger than x in Step S36, it is investigated whether or not the remainder of a global function (h/2) is "1" (Step S37). When it is determined that the remainder of the global function (h/2) is "1" in Step S37, the inter-cell balancing discharge signal is sent to the inter-cell discharge switches SW1 for discharging the cell batteries 1 in which k is odd in the data (k, i, j) stored in Step S34 (Step S38). Thereafter, the operations return to Step S31, and the above-described processing is repeated.

When it is determined that the remainder of the global function (h/2) is not "1" in Step S37, the inter-cell balancing discharge signal is sent to the inter-cell discharge switches SW1 for discharging the cell batteries 1 in which k is even in the data (k, i, j) stored in Step S34 (Step S39). Thereafter, the operations return to Step S31, and the above-described processing is repeated.

As described above, in accordance with the battery system according to Embodiment 7 of the present invention, the discharge of the cell batteries 1 in each of the module batteries 10, in which the voltages have differences of the threshold value ΔVCellB or more, sequentially goes on. As a result, all of the x pieces of cell batteries 1 are finally made to converge on the minimum cell voltage V_CellMin (i, j). Therefore, a balancing discharge time is shortened without reducing values of the inter-cell discharge resistors R1, that is, without increasing a discharge current. Moreover, the cell batteries 1 with even ordinal numbers and the cell batteries 1 with odd ordinal numbers are discharged alternately, whereby heat generation owing to the discharge can be suppressed without increasing the discharge current.

### (Embodiment 8)

A configuration of a battery system according to Embodiment 8 of the present invention is the same as the configuration of the battery system according to Embodiment 7 mentioned above; however, the battery system according to Embodiment 8 is different from the battery system according to Embodiment 7 only in operations of each of the cell voltage detection/inter-cell balancing circuits 2. A description will be mainly made below of portions different from those of the battery system according to Embodiment 7.

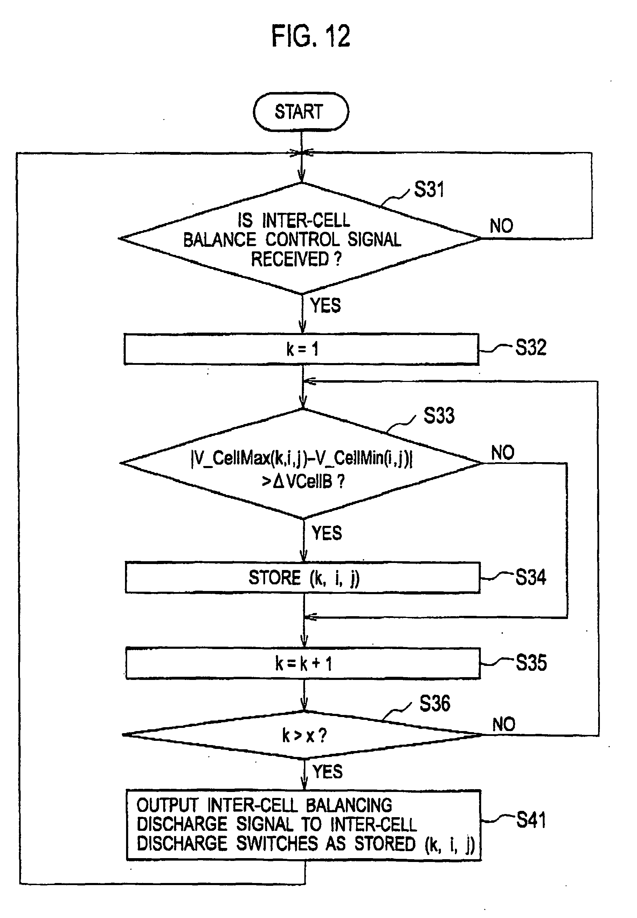

FIG. 12 is a flowchart showing the operations of each of the cell voltage detection/inter-cell balancing circuits 2 of the battery system according to Embodiment 8 of the present invention. In this flowchart, the same reference numerals as those used in the flowchart of FIG. 11 are assigned to steps of executing the same processing as the processing (refer to the flowchart of FIG. 11) executed in the cell voltage detection/inter-cell balancing circuit 2 of the battery system according to embodiment 7, and a description thereof will be omitted.

In the cell voltage detection/inter-cell balancing circuit 2, the processing from Step S31 to S36 is executed as in Embodiment 7. Then, when it is determined that the variable k has not become larger than x in Step S36, the operations return to Step S33, and the above-mentioned processing is repeated. Meanwhile, when it is determined that the variable k has become larger than x in Step S36, the inter-cell balancing discharge signal is sent to the inter-cell discharge switches SW1 for discharging the cell batteries 1 corresponding to the data (k, i, j) stored in Step S34 mentioned above (Step S41). Thereafter, the operations return to Step S31, and the above-described processing is repeated.

As described above, in accordance with the battery system according to Embodiment 8 of the present invention, the discharge of the cell batteries 1 in each of the module batteries 10, in which the voltages have differences of the threshold value ΔVCellB or more, sequentially goes on, whereby all of the x pieces of cell batteries 1 are finally made to converge on the minimum cell voltage V_CellMin. As a result in the battery system according to Embodiment 8 of the present invention, the balancing discharge time can be shortened without reducing the values of the inter-cell discharge resistors R1.

### (Embodiment 9)

A battery system according to Embodiment 9 of the present invention is the battery system according to any one of Embodiment 2 to Embodiment 8, which does not perform the inter-cell balancing discharge at the time of detecting the cell voltage, and performs the inter-cell balancing discharge at the time of not detecting the cell voltage.

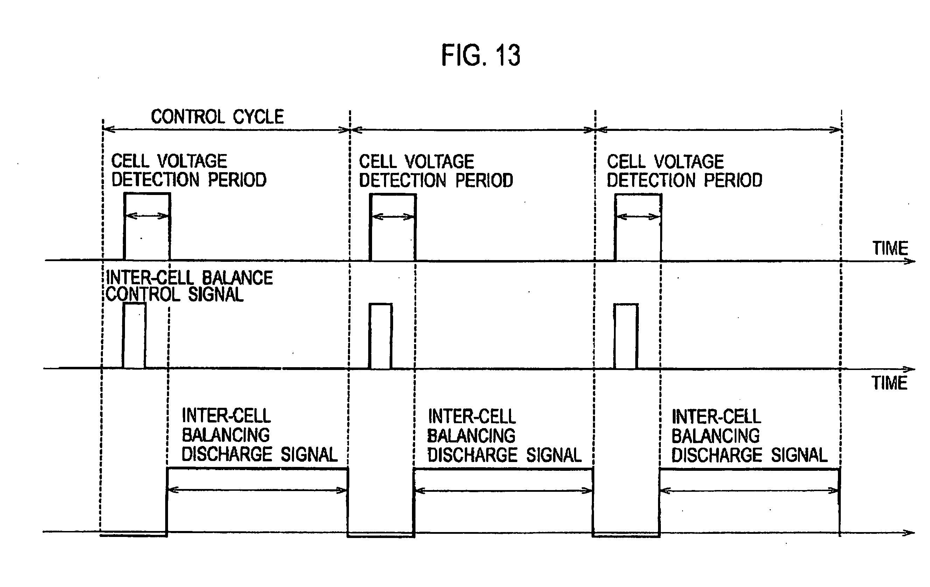

FIG. 13 is a timing chart for explaining operations of the battery system according to Embodiment 9. The cell voltage detection/inter-cell balancing circuit 2 of each of the y×w pieces of module batteries 10 discharges the cell batteries 1 in response to the inter-cell balance control signal sent from the inter-cell balance control circuit 41a or to the inter-cell balance control signal sent from the inter-cell balance control circuit 41a through the module management unit 5 during a period (inter-cell balancing discharge period) excluding a period (cell voltage detection period) of detecting the cell voltage generated in each of the x pieces of cell batteries 1.

As described above, in accordance with the battery system according to Embodiment 9 of the present invention, a configuration is adopted, in which the inter-cell balancing discharge is not performed at the time of detecting the cell voltage, and the inter-cell balancing discharge is performed at the time of not detecting the cell voltage. Therefore, a voltage drop does not occur at the time of detecting the cell voltage. As a result, in the battery system according to Embodiment 9 of the present invention, the discharge for balancing the cells can be performed without lowering voltage detection accuracy.

### (Embodiment 10)

A battery system according to Embodiment 10 of the present invention is the battery system according to Embodiment 9, in which a predetermined margin period is provided between the period of detecting the cell voltage and the period of performing the inter-cell balancing discharge.

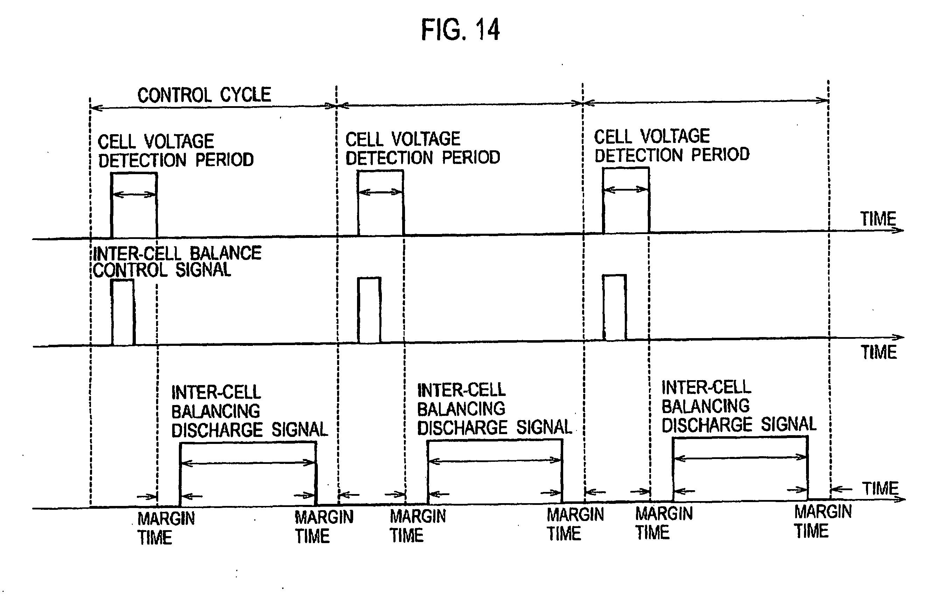

FIG. 14 is a timing chart for explaining operations of the battery system according to Embodiment 10. The cell voltage detection/inter-cell balancing circuit 2 of each of the y×w pieces of module batteries 10 discharges the cell batteries 1 in response to the inter-cell balance control signal sent from the inter-cell balance control circuit 41a or to the inter-cell balance control signal sent from the inter-cell balance control circuit 41a through the module management unit 5 during a period (inter-cell balancing discharge period) excluding the period (cell voltage detection period) of detecting the cell voltage generated in each of the x pieces of cell batteries 1 and the predetermined margin periods before and after the cell voltage detection period.

As described above, in accordance with the battery system according to Embodiment 10 of the present invention, the inter-cell balancing discharge is not performed at the time of detecting the cell voltage. Meanwhile, at the time of not detecting the cell voltage, the inter-cell balancing discharge is executed, and in addition, the predetermined margin period is provided between the cell voltage detection period and the inter-cell balancing discharge period. Therefore, the voltage drop that occurs at the time of detecting the cell voltage can be avoided with margin. As a result, in the battery system according to Embodiment 10 of the present invention, the discharge for balancing the cells can be performed without lowering the voltage detection accuracy.

### (Embodiment 11)

A configuration of a battery system according to Embodiment 11 of the present invention is the same as the configuration of the battery system according to Embodiment 6, which is shown in FIG. 8.

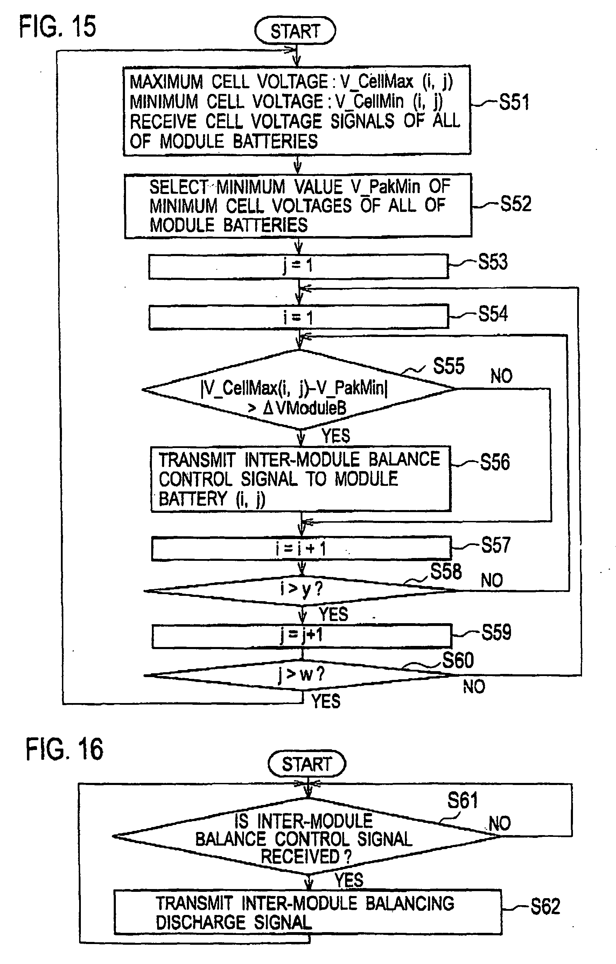

A description will be made of operations of the battery system according to Embodiment 11. First, a description will be made of operations of the inter-module balance control circuit 41b included in the battery management unit 4 while referring to a flowchart shown in FIG. 15.

First, the inter-module balance control circuit 41b receives the cell voltage signals from all of the module batteries 10 (Step S51). Specifically, the inter-module balance control circuit 41b receives the cell voltage signals including the maximum cell voltages V_CellMax (i, j) and the minimum cell voltages V_CellMin (i, j), which are transmitted from the y×w pieces of module batteries 10.

Subsequently, a minimum value V_PakMin of the minimum cell voltages of all of the module batteries 10 is selected (Step S52). Specifically, the minimum value V-PakMin is selected from among the minimum cell voltages V_CellMin (i, j) included in the cell voltage signals received in Step S51.

Subsequently, the variable j is initialized to "1" (Step S53). Subsequently, the variable i is initialized to "1" (Step S54). Subsequently, it is investigated whether or not an absolute value of a difference between the maximum cell voltage V_CellMax (i, j) acquired in Step S51 and the minimum value V_PakMin selected in Step S52 is larger than a threshold value ΔVModuleB (Step S55). When it is determined in Step S55 that the absolute value of the difference between the maximum cell voltage V_CellMax (i, j) and the minimum value V_PakMin is larger than the threshold value ΔVModuleB, the inter-module balance control signal is transmitted to the module battery (i, j) (Step S56). When it is determined in Step S55 that the absolute value of the difference between the maximum cell voltage V_CellMax (i, j) and the minimum value V_PakMin is not larger than the threshold value ΔVModuleB, such processing of Step S56 is skipped.

Subsequently, the variable i is incremented (+1) (Step S57). Subsequently, it is investigated whether or not the variable i has become larger than y, that is, whether or not the processing for the y pieces of module batteries 10 connected in series is ended (Step S58). When it is determined that the variable i has not become larger than y in Step S58, the operations return to Step S55, and the above-described processing is repeated.

Meanwhile, when it is determined that the variable i has become larger than y in Step S58, the variable j is subsequently incremented (+1) (Step S59). Subsequently, it is investigated whether or not the variable j has become larger than w, that is, whether or not the processing for the w pieces of module batteries 10 connected in parallel is ended (Step S60). When it is determined that the variable j has not become larger than w in Step S60, the operations return to Step S54, and the above-described processing is repeated. Meanwhile, when it is determined that the variable j has become larger than w in Step S60, the operations return to Step S51, and the above-described processing is repeated.

Next, a description will be made of operations of each of the inter-module balancing circuits 3 while referring to a flowchart shown in FIG. 16. It is first investigated whether or not the inter-module balancing circuit 3 has received the inter-module balance control signal (Step S61). When it is determined that the inter-module balance control signal has not been received in Step S61, the inter-module balancing circuit 3 stands by while repeatedly executing Step S61.

When it is determined that the inter-module balance control signal has been received in such a standby state where Step S61 is repeatedly executed, the inter-module balancing discharge signal is transmitted (Step S62). Specifically, the inter-module balancing discharge signal is sent to the inter-module discharge switch SW2. In such a way, the module battery 10 is discharged as a whole.

As described above, in accordance with the battery system according to Embodiment 1 of the present invention, the discharge of the module battery 10 and the discharge of the cell battery 1 are performed in combination. As a result, in the battery system according to Embodiment 11 of the present invention, the discharge time for balancing the energy therein can be shortened.

### (Embodiment 12)

A battery system according to Embodiment 12 of the present invention is the battery system according to any one of Embodiment 2 to Embodiment 8, which performs the inter-module balancing discharge when required no matter whether or not the cell voltage is being detected.

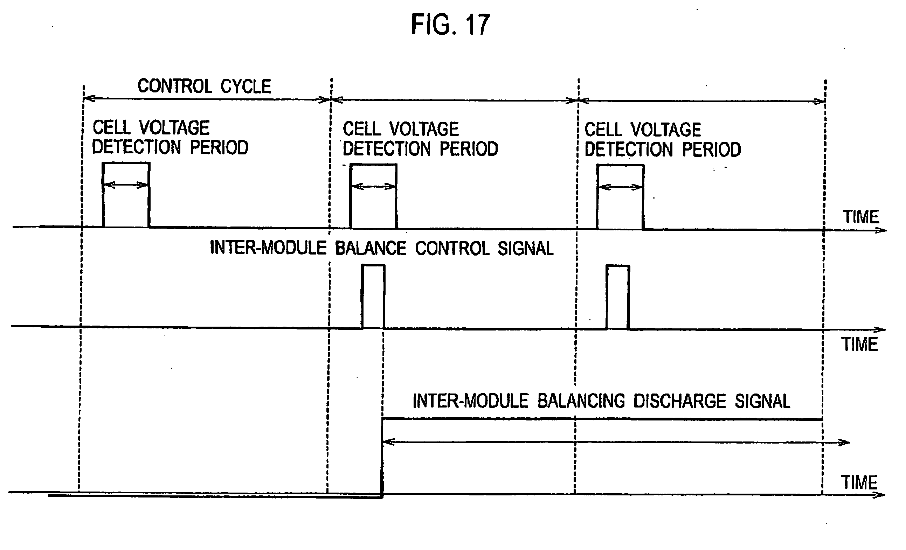

FIG. 17 is a timing chart for explaining operations of the battery system according to Embodiment 12. The inter-module balancing circuit 3 sends the inter-module balance control signal, which is sent from the inter-module balance control circuit 41b, to the inter-module discharge switch SW2 independently of the detection period of the cell voltage generated in each of the x pieces of cell batteries 1 in the cell voltage detection/inter-cell balancing circuit 2 of each of the y×w pieces of module batteries 10. Then, a period after the inter-module balance control signal is received is defined as an inter-module balancing discharge period, and the module battery 10 concerned is discharged during this inter-module balancing discharge period.

As described above, in accordance with the battery system according to Embodiment 12 of the present invention, the discharge of the module battery 10, which does not affect the detection of the cell voltage, is always performed after the inter-module balance control signal from the inter-module balance control signal 41b is received. As a result, in the battery system according to Embodiment 12 of the present invention, such a balancing discharge time can be shortened.

## Claims

1. A battery system in which module batteries, each of which includes cell batteries connected in series, are connected to one another, the battery system comprising:
a battery management unit that manages states of the module batteries,
wherein each of the module batteries comprises:
a cell voltage detection/inter-cell balancing circuit that detects a cell voltage of each of the cell batteries, sends the detected cell voltage as a cell voltage signal to the battery management unit, and balances energies among the cell batteries based on an inter-cell balance control signal sent from the battery management unit in response to the cell voltage signal; and
an inter-module balancing circuit that balances energies among the module batteries based on an inter-module balance control signal sent from the battery management unit, and
the battery management unit comprises:
an inter-cell balance control circuit that, based on the cell voltage signals sent from the cell voltage detection/inter-cell balancing circuits of the module batteries, creates the inter-cell balance control signal for balancing the energies among the cell batteries in each of the module batteries, and sends the inter-cell balance control signal to the cell voltage detection/inter-cell balancing circuit in each of the module batteries; and
an inter-module balance control circuit that, based on the cell voltage signals sent from the cell voltage detection/inter-cell balancing circuits of the module batteries, creates the inter-module balance control signal for balancing the energies among the module batteries, and sends the inter-module balance control signal to the inter-module balancing circuits in the module batteries.

2. The battery system according to claim 1,
wherein each of the module batteries further comprises a module management unit that:
sends, to the battery management unit, the cell voltage signals sent from the cell voltage detection/inter-cell balancing circuit;
sends, to the cell voltage detection/inter-cell balancing circuit, the inter-cell balance control signal sent from the inter-cell balance control circuit of the battery management unit, thereby balances the energies among the cell batteries; and
sends, to the inter-module balancing circuit, the inter-module balance control signal sent from the inter-module balance control circuit of the battery management unit, thereby balances the energies among the module batteries.

3. The battery system according to claim 1,
wherein each of the module batteries further comprises:
inter-cell discharge resistors, in each of which one end is connected to a voltage detection line drawn out from between ends of the adjacent cell batteries, and other end is connected to the cell voltage detection/inter-cell balancing circuit;
inter-cell discharge switches, each of which is provided between the other ends of the adjacent inter-cell discharge resistors, and opens/closes in response to an inter-cell balancing discharge signal sent from the cell voltage detection/inter-cell balancing circuit; and
a series circuit that is provided between a positive electrode of the cell battery held at a highest potential and a negative electrode of the cell battery held at a lowest potential among the cell batteries, and is composed of an inter-module discharge resistor and an inter-module discharge switch opening/closing in response to an inter-module balancing discharge signal sent from the inter-module balancing circuit.

4. The battery system according to claim 1,
wherein each of the module batteries further comprises:
series circuits, each of which is provided between adjacent voltage detection lines drawn out from both ends of the cell batteries and connected to the cell voltage detection/inter-cell balancing circuit, and is composed of an inter-cell discharge resistor and an inter-cell discharge switch opening/closing in response to an inter-cell balancing discharge signal from the cell voltage detection/inter-cell balancing circuit; and
a series circuit that is provided between a positive electrode of the cell battery held at a highest potential and a negative electrode of the cell battery held at a lowest potential among the cell batteries, and is composed of an inter-module discharge resistor and an inter-module discharge switch opening/closing in response to an inter-module balancing discharge signal from the inter-module balancing circuit.

5. The battery system according to either one of claims 3 and 4,
wherein the cell voltage detection/inter-cell balancing circuit of each of the module batteries detects a maximum value and minimum value of the cell voltage of each of the cell batteries, and sends the detected maximum value and minimum value of the cell voltage of each of the cell batteries as a cell voltage signal to the battery management unit,
in a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit creates the inter-cell balance control signal for balancing the energies among the cell batteries in each of the module batteries, and sends the inter-cell balance control signal to the cell voltage detection/inter-cell balancing circuit in each of the module batteries, and
the cell voltage detection/inter-cell balancing circuit sends the inter-cell balance control signal, which is sent from the inter-cell balance control circuit, to the inter-cell discharge switch corresponding to the cell battery in which the maximum cell voltage is detected, thereby discharges the cell battery in which the maximum cell voltage is detected.

6. The battery system according to either one of claims 3 and 4,
wherein the cell voltage detection/inter-cell balancing circuit of each of the module batteries detects a maximum value and minimum value of the cell voltage of each of the cell batteries, and sends the detected maximum value and minimum value of the cell voltage as a cell voltage signal to the battery management unit,
in a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit creates the inter-cell balance control signal for balancing the energies among the cell batteries in each of the module batteries, and sends the inter-cell balance control signal to the cell voltage detection/inter-cell balancing circuit in each of the module batteries, and
the cell voltage detection/inter-cell balancing circuit sends the inter-cell balance control signal, which is sent from the inter-cell balance control circuit, alternately to the inter-cell discharge switches with odd ordinal numbers and the inter-cell discharge switches with even ordinal numbers, the inter-cell discharge switches with both of the ordinal numbers corresponding to all of the cell batteries in each of which the difference value between the maximum value and minimum value of the cell voltage is larger than the predetermined threshold value, thereby discharges the cell batteries in each of which the difference value between the maximum value and minimum value of the cell voltage.

7. The battery system according to either one of claims 3 and 4,
wherein the cell voltage detection/inter-cell balancing circuit of each of the module batteries detects a maximum value and minimum value of the cell voltage of each of the cell batteries, and sends the detected maximum value and minimum value of the cell voltage as a cell voltage signal to the battery management unit,
in a case where a difference value between the maximum value and minimum value of the cell voltage, which are indicated by the cell voltage signal sent from the cell voltage detection/inter-cell balancing circuit of each of the module batteries, is larger than a predetermined threshold value, the inter-cell balance control circuit of the battery management unit creates the inter-cell balance control signal for balancing the energies among the cell batteries in each of the module batteries, and sends the inter-cell balance control signal to the cell voltage detection/inter-cell balancing circuit in each of the module batteries, and
the cell voltage detection/inter-cell balancing circuit sends the inter-cell balance control signal, which is sent from the inter-cell balance control circuit, to the inter-cell discharge switches corresponding to all of the cell batteries in each of which the difference value between the maximum value and minimum value of the cell voltage is larger than the predetermined threshold value, thereby discharges the cell batteries in each of which the difference value between the maximum value and minimum value of the cell voltage is larger than the predetermined threshold value.

8. The battery system according to either one of claims 3 and 4,
wherein the cell voltage detection/inter-cell balancing circuit of each of the module batteries discharges the cell batteries in response to the inter-cell balance control signal sent from the inter-cell balance control circuit during a period excluding a detection period of the cell voltage of each of the cell batteries.

9. The battery system according to either one of claims 3 and 4,
wherein the cell voltage detection/inter-cell balancing circuit of each of the module batteries discharges the cell batteries in response to the inter-cell balance control signal sent from the inter-cell balance control circuit during a period excluding a detection period of the cell voltage of each of the cell batteries and predetermined margin periods before and after the detection period.

10. The battery system according to either one of claims 3 and 4,
wherein the cell voltage detection/inter-cell balancing circuit of each of the module batteries detects a maximum value and minimum value of the cell voltage of each of the cell batteries, and sends the detected maximum value and minimum value of the cell voltage as a cell voltage signal to the battery management unit,
in a case where a difference value between the minimum value of the cell voltage indicated by the cell voltage signal sent from the cell voltage detection/inter-cell balancing circuit of each of the module batteries and a minimum value of the cell voltages indicated by the cell voltage signals sent from the cell voltage detection/inter-cell balancing circuits of all of the module batteries is larger than a predetermined threshold value, the inter-module balance control circuit of the battery management unit creates the inter-module balance control signal for balancing the energies among the module batteries, and sends the inter-module balance control signal to the inter-module balancing circuits in the module batteries, and
the inter-module balancing circuit sends the inter-module balance control signal, which is sent from the inter-module balance control circuit, to the inter-module discharge switch, thereby discharges the module battery.

11. The battery system according to either one of claims 3 and 4,
wherein the inter-module balancing circuit sends the inter-module balance control signal, which is sent from the inter-module balance control circuit, to the inter-module discharge switch independently of a detection period of the cell voltage of each of the cell batteries in the cell voltage detection/inter-cell balancing circuit of each of the module batteries, thereby discharges the module battery.

12. A battery system in which module batteries, each of which includes cell batteries connected in series, are connected to one another,
wherein each of the module batteries comprises:
a cell voltage detection/inter-cell balancing circuit that detects a cell voltage of each of the cell batteries to then create a cell voltage signal, and balances energies among the cell batteries based on the created cell voltage signal; and
an inter-module balancing circuit that balances energies among the module batteries based on a module voltage obtained by summing up the cell voltages of the cell batteries.

## Patentansprüche

1. Batteriesystem, in welchem Modulbatterien, welche jeweils in Serie verbundene Zellenbatterien beinhalten, zueinander verbunden sind, wobei das Batteriesystem umfasst:
eine Batterieverwaltungseinheit, welche Zustände der Modulbatterien verwaltet,
wobei jede der Modulbatterien umfasst:
eine Zellenspannungsumfassungs/Zwischenzellenausgleichsschaltung, welche eine Zellenspannung von jeder der Zellenbatterien erfasst, die erfasste Zellenspannung als ein Zellenspannungssignal zu der Batterieverwaltungseinheit sendet, und Energien zwischen den Zellenbatterien ausgleicht basierend auf einem Zwischenzellenausgleichssteuersignal, das von der Batterieverwaltungseinheit in Antwort auf das Zellenspannungssignal gesendet wird; und
eine Zwischenmodulausgleichsschaltung, welche Energien zwischen den Modulbatterien ausgleicht basierend auf einem Zwischenmodulausgleichssteuersignal, das von der Batterieverwaltungseinheit gesendet wird, und
die Batterieverwaltungseinheit umfasst:
eine Zwischenzellenausgleichssteuerschaltung, welche, basierend auf den Zellenspannungssignalen, die von den Zellenspannungserfassungs/Zwischenzellenausgleichsschaltungen der Modulbatterien gesendet werden, das Zwischenzellenausgleichssteuersignal zum Ausgleichen der Energien zwischen den Zellenbatterien in jeder der Modulbatterien erzeugt, und das Zwischenzellenausgleichssteuersignal zu der Zellenspannungserfassungs/Zwischenzellenausgleichsschaltung jeder der Modulbatterien sendet; und
eine Zwischenmodulausgleichssteuerschaltung, welche, basierend auf den Zellenspannungssignalen, die von dem Zellenspannungserfassungs/Zwischenzellenausgleichsschaltungen der Modulbatterien gesendet werden, das Zwischenmodulausgleichssteuersignal zum Ausgleichen der Energien zwischen den Modulbatterien erzeugt, und das Zwischenmodulausgleichssteuersignal zu den Zwischenmodulausgleichsschaltungen in den Modulbatterien sendet.

2. Batteriesystem nach Anspruch 1,
wobei jede der Modulbatterien ferner eine Modulverwaltungseinheit umfasst, welche:
zu der Batterieverwaltungseinheit die Zellenspannungssignale, die von der Zellenspannungserfassungs-/Zwischenzellenausgleichseinheit gesendet werden, sendet;
zu der Zellenspannungserfassungs/Zwischenzellenausgleichsschaltung das Zwischenzellenausgleichssteuersignal, das von der Zwischenzellenausgleichssteuerschaltung der Batterieverwaltungseinheit gesendet wird, sendet, wodurch es die Energien zwischen den Zellenbatterien ausgleicht; und
zu der Zwischenmodulausgleichsschaltung das Zwischenmodulausgleichssteuersignal, das von der Zwischenmodulausgleichssteuerschaltung der Batterieverwaltungseinheit gesendet wird, sendet, wodurch es die Energien zwischen den Modulbatterien ausgleicht.

3. Batteriesystem nach Anspruch 1,
wobei jede der Modulbatterien ferner umfasst:
Zwischenzellenentladungswiderstände, wobei in Jeder ein Ende zu einer Spannungserfassungsleitung verbunden ist, die von zwischen Enden der benachbarten Zellenbatterien gezogen ist, und ein anderes Ende zu der Zellenspannungserfassungs/Zwischenzellenausgleichsschaltung verbunden ist;
Zwischenzellenentladungsschalter, welche jeweils zwischen den anderen Enden der benachbarten Zwischenzellenentladungswiderständen vorgesehen ist, und öffnet/schließt reagierend auf ein Zwischenzellenausgleichsentladungssignal, das von der Zellenspannungserfassungs/Zwischenzellenausgleichsschaltung gesendet wird; und
eine Serienschaltung, die zwischen einer positiven Elektrode der Zellenbatterie, die bei einem höchsten Potential gehalten wird, und einer negativen Elektrode der Zellenbatterie, die bei einem niedrigsten Potential gehalten wird, unter den Zellenbatterien, vorgesehen ist, und besteht aus einem Zwischenmodulentladungswiderstand und einem Zwischenmodulentladungsschalter, der öffnet/schließt, reagierend auf ein Zwischenmodulausgleichsentladungssignal, das von der Zwischenmodulausgleichsschaltung gesendet wird.

4. Batteriesystem nach Anspruch 1,
wobei jede der Modulbatterien ferner umfasst:
Serienschaltung, die jeweils zwischen benachbarten Spannungserfassungsleitungen, die von beiden Enden der Zellenbatterien gezogen sind und zu der Zellenspannungserfassungs/Zwischenzellenausgleichsschaltung verbunden sind, vorgesehen sind, und aus einem Zwischenzellenentladungswiderstand und einem Zwischenzellenentladungsschalter besteht, der reagierend auf ein Zwischenzellenausgleichsentladungssignal von der Zellenspannungserfassungs/Zwischenzellenausgleichsschaltung öffnet/schließt; und
eine Serienschaltung, die zwischen einer positiven Elektrode der Zellenbatterie, die bei einem höchsten Potential gehalten wird, und einer negativen Elektrode der Zellenbatterie, die bei einem niedrigsten Potential gehalten wird, unter den Zellenbatterien, vorgesehen ist, und aus einem Zwischenmodulentladungswiderstand und einem Zwischenmodulentladungsschalter besteht, der reagierend auf ein Zwischenmodulausgleichsentladungssignal von der Zwischenmodulausgleichsschaltung öffnet/schließt.

5. Batteriesystem nach einem der Ansprüche 3 und 4,
wobei die Zellenspannungserfassungs/Zwischenzellenausgleichsschaltung von jeder der Modulbatterien einen Maximalwert und einen Minimalwert der Zellenspannung von jeder der Zellenbatterien erfasst und den erfassten Maximalwert und Minimalwert der Zellenspannung von jeder der Zellenbatterien als ein Zellenspannungssignal zu der Batterieverwaltungseinheit sendet,
in einem Fall, in welchem ein Differenzwert zwischen dem Maximalwert und Minimalwert der Zellenspannung, die durch das Zellenspannungssignal, das von der Zellenspannungserfassungs/Zwischenzellenausgleichsschaltung von jeder der Modulbatterien gesendet wird, angezeigt wird, größer ist als ein vorbestimmter Schwellwert, die Zwischenzellenausgleichssteuerschaltung der Batterieverwaltungseinheit das Zwischenzellenausgleichssteuersignal erzeugt zum Ausgleichen der Energien zwischen den Zellenbatterien in jeder der Modulbatterien, und das Zwischenzellenausgleichssteuersignal zu der Zellenspannungserfassungs/Zwischenzellenausgleichsschaltung in jeder der Modulbatterien sendet, und
die Zellenspannungserfassungs/Zwischenzellenausgleichsschaltung das Zwischenzellenausgleichssteuersignal, welches von der Zwischenzellenausgleichssteuerschaltung gesendet wird, zu dem Zwischenzellenentladungsschalter entsprechend der Zellenbatterie, in welcher die Maximalzellenspannung erfasst wird, sendet, wodurch es die Zellenbatterie, in welcher die Maximalzellenspannung erfasst wird, entlädt.

6. Batteriesystem nach einem der Ansprüche 3 und 4,
wobei die Zellenspannungserfassungs/Zwischenzellenausgleichsschaltung von jeder der Modulbatterien einen Maximalwert und einen Minimalwert der Zellenspannung von jeder der Zellenbatterien erfasst, und den erfassten Maximalwert und Minimalwert der Zellenspannung als ein Zellenspannungssignal zu der Batterieverwaltungseinheit sendet,
in einem Fall, in welchem ein Differenzwert zwischen dem Maximalwert und Minimalwert der Zellenspannung, welche durch das Zellenspannungssignal, das von der Zellenspannungserfassungs/Zwischenzellenausgleichsschaltung von jeder der Modulbatterien gesendet wird, angezeigt wird, größer ist als ein vorbestimmter Schwellwert, die Zwischenzellenausgleichssteuerschaltung der Batterieverwaltungseinheit das Zwischenzellenausgleichssteuersignal erzeugt zum Ausgleichen der Energien zwischen den Zellenbatterien in jeder der Modulbatterien, und das Zwischenzellenausgleichssteuersignal zu der Zellenspannungserfassungs/Zwischenzellenausgleichsschaltung in jeder der Modulbatterien sendet, und
die Zellenspannungserfassungs/Zwischenzellenausgleichsschaltung das Zwischenzellenausgleichssteuersignal, welches von der Zwischenzellenausgleichssteuerschaltung gesendet wird, abwechselnd zu den Zwischenzellenausgleichsschaltern mitungeraden Ordnungszahlen und den Zwischenzellenentladungsschaltern mit geraden Ordnungszahlen sendet, wobei die Zwischenzellenentladungsschalter mit beiden der Ordnungszahlen allen Zellenbatterien entsprechen, in jeder von welchen die Differenzwerte zwischen dem Maximalwert und dem Minimalwert der Zellenspannung größer ist als der vorbestimmte Schwellwert, wodurch die Zellenbatterien, in jeder von welchen der Differenzwert zwischen dem Maximalwert und dem Minimalwert der Zellenspannung, entladen wird.

7. Batteriesystem nach einem der Ansprüche 3 und 4,
wobei die Zellenspannungserfassungs/Zwischenzellenausgleichsschaltung von jeder der Modulbatterien einen Maximalwert und einen Minimalwert der Zellenspannung von jeder der Zellenbatterien erfasst, und den erfassten Maximalwert und Minimalwert der Zellenspannung als ein Zellenspannungssignal zu der Batterieverwaltungseinheit sendet,
in einem Fall, in welchem ein Differenzwert zwischen dem Maximalwert und Minimalwert der Zellenspannung, welche durch das Zellenspannungssignal, das von der Zellenspannungserfassungs/Zwischenzellenausgleichsschaltung von jeder der Modulbatterien gesendet wird, angezeigt wird, größer ist als ein vorbestimmter Schwellwert, die Zwischenzellenausgleichssteuerschaltung der Batterieverwaltungseinheit das Zwischenzellenausgleichssteuersignal erzeugt zum Ausgleichen der Energien zwischen den Zellenbatterien in jeder der Modulbatterien, und das Zwischenzellenausgleichssteuersignal zu der Zellenspannungserfassungs/Zwischenzellenausgleichsschaltung in jeder der Modulbatterien sendet, und
die Zellenspannungserfassungs/Zwischenzellenausgleichsschaltung das Zwischenzellenausgleichssteuersignal, welches von der Zwischenzellenausgleichssteuerschaltung gesendet wird, zu den Zwischenzellenentladungsschaltern sendet entsprechend all der Zellenbatterien jeder von welchen der Differenzwert zwischen dem Maximalwert und Minimalwert der Zellenspannung größer ist als der vorbestimmte Schwellwert, wodurch es die Zellenbatterien in jeder von welchen der Differenzwert zwischen dem Maximalwert und Minimalwert der Zellenspannung größer ist als der vorbestimmte Schwellwert, entlädt.

8. Batteriesystem nach einem der Ansprüche 3 und 4,
wobei die Zellenspannungserfassungs/Zwischenzellenausgleichsschaltung von jeder Modulbatterien die Zellenbatterien reagierend auf das Zwischenzellenausgleichssteuersignal entlädt, das von der Zwischenzellenausgleichssteuerschaltung während einer Periode gesendet wird, welche eine Erfassungsperiode der Zellenspannung von jeder der Zellenbatterien ausschließt.

9. Batteriesystem nach einem der Ansprüche 3 und 4,
wobei die Zellenspannungserfassungs/Zwischenzellenausgleichsschaltung von jeder der Modulbatterien die Modulbatterien reagierend auf das Zwischenzellenausgleichssteuersignal entlädt, das von der Zwischenzellenausgleichssteuerschaltung während einer Periode gesendet wird, die eine Erfassungsperiode der Zellenspannung von jeder der Zellenbatterien und Seitenrandperioden vor und nach der Erfassungsperiode ausschließt.

10. Batteriesystem nach einem der Ansprüche 3 und 4,
wobei die Zellenspannungserfassungs/Zwischenzellenausgleichsschaltung von jeder der Modulbatterien einen Maximalwert und einen Minimalwert der Zellenspannung von jeder der Zellenbatterien erfasst, und den erfassten Maximalwert und Minimalwert der Zellenspannung als ein Zellenspannungssignal zu der Batterieverwaltungseinheit sendet,
in einem Fall, in welchem ein Differenzwert zwischen dem Minimalwert der Zellenspannung, der durch das Zellenspannungssignal, das von der Zellenspannungserfassungs/Zwischenzellenausgleichsschaltung von jeder der Modulbatterien gesendet wird, angezeigt wird, und einem Minimalwert der Zellenspannung, der durch Zellenspannungssignale, die von der Zellenspannungserfassungs/Zwischenzellenausgleichsschaltungen von all den Modulbatterien gesendet werden, angezeigt wird, größer ist als ein vorbestimmter Schwellwert, die Zwischenmodulausgleichssteuerschaltung der Batterieverwaltungseinheit das Zwischenmodulausgleichssteuersignal erzeugt zum Ausgleichen der Energien zwischen den Modulbatterien, und das Zwischenmodulausgleichssteuersignal zu den Zwischenmodulausgleichsschaltungen in den Modulbatterien sendet, und
die Zwischenmodulausgleichsschaltung das Zwischenmodulausgleichssteuersignal, welches von der Zwischenmodulausgleichssteuerschaltung gesendet wird, zu dem Zwischenmodulentladungsschalter sendet, wodurch es die Modulbatterie entlädt.

11. Batteriesystem nach einem der Ansprüche 3 und 4,
wobei die Zwischenmodulausgleichsschaltung das Zwischenmodulausgleichssteuersignal, welches von der Zwischenmodulausgleichssteuerschaltung gesendet wird, zu dem Zwischenmodulentladungsschalter sendet unabhängig von einer Erfassungsperiode der Zellenspannung von jeder der Zellenbatterien in der Zellenspannungserfassungs/Zwischenzellenausgleichsschaltung von jeder der Modulbatterien, wodurch es die Modulbatterie entlädt.

12. Batteriesystem, in welchem Modulbatterien, welche jeweils Zellenbatterien verbunden in Serie beinhalten, zueinander verbunden sind,
wobei jede der Modulbatterien umfasst
ein Zellenspannungserfassungs/Zwischenzellenausgleichsschaltung, die eine Zellenspannung von jeder der Zellenbatterien erfasst, um dann ein Zellenspannungssignal zu erzeugen, und Energien zwischen den Zellenbatterien basierend auf dem erzeugten Zellenspannungssignal ausgleicht; und
eine Zwischenmodulausgleichsschaltung, welche Energien zwischen den Modulbatterien basierend auf einer Modulspannung ausgleicht, die erlangt wird durch Aufsummieren der Zellenspannungen der Zellenbatterien.

## Revendications

1. Système de batterie dans lequel des batteries de module, chacune desquelles comprend des batteries de cellule connectées en série qui sont connectées entre elles, le système de batterie comprenant :
une unité de gestion de batterie qui gère des états des batteries de modules,
dans lequel chacune des batteries de module comprend :
un circuit de détection de tension de cellule/d'équilibrage entre cellules qui détecte une tension de cellule de chacune des batteries de cellule, transmet la tension de cellule détectée comme un signal de tension de cellule à l'unité de gestion de batterie et équilibre des énergies entre les batteries de cellule sur la base d'un signal de contrôle d'équilibrage entre cellules transmis par l'unité de gestion de batterie en réponse au signal de tension de cellule ; et
un circuit d'équilibrage entre modules qui équilibre des énergies entre les batteries de module sur la base d'un signal de contrôle d'équilibrage entre modules transmis par l'unité de gestion de batterie, et
l'unité de gestion de batterie comprend :
un circuit de contrôle d'équilibrage entre cellules qui, sur la base des signaux de tension de cellule transmis par les circuits de détection de tension de cellule/d'équilibrage entre cellules des batteries de module, génère un signal de contrôle d'équilibrage entre cellules pour équilibrer les énergies entre les batteries de cellule dans chacune des batteries de module et transmet le signal de contrôle d'équilibrage entre cellules au circuit de détection de tension de cellule/d'équilibrage entre cellules dans chacune des batteries de module ; et
un circuit de contrôle d'équilibrage entre modules qui, sur la base des signaux de tension de cellule transmis par les circuits de détection de tension de cellule/d'équilibrage entre cellules des batteries de module, génère le signal de contrôle d'équilibrage entre modules pour équilibrer les énergies entre les batteries de module et transmet le signal de contrôle d'équilibrage entre modules aux circuits d'équilibrage entre modules dans les batteries de module.

2. Système de batterie selon la revendication 1,
dans lequel chacune des batteries de module comprend en outre une unité de gestion de module qui :
transmet, à l'unité de gestion de batterie, les signaux de tension de cellule transmis par le circuit de détection de tension de cellule/d'équilibrage entre cellules ;
transmet, au circuit de détection de tension de cellule/d'équilibrage entre cellules, le signal de contrôle d'équilibrage entre cellules transmis par le circuit de contrôle d'équilibrage entre cellules de l'unité de gestion de batterie, moyennant quoi elle équilibre les énergies entre les batteries de cellule ; et
transmet, au circuit d'équilibrage entre modules, le signal de contrôle d'équilibrage entre modules transmis par le circuit de contrôle d'équilibrage entre modules de l'unité de gestion de batterie, moyennant quoi elle équilibre les énergies entre les batteries de module.

3. Système de batterie selon la revendication 1,
dans lequel chacune des batteries de module comprend en outre :
des résistances de décharge entre cellules, dans chacune desquelles une extrémité est connectée à une ligne de détection de tension réalisée entre des extrémités des batteries de cellule adjacentes, et l'autre extrémité est connectée au circuit de détection de tension de cellule/d'équilibrage entre cellules ;
des commutateurs de décharge entre cellules, chacun desquels est prédisposé entre les autres extrémités des résistances de décharge entre cellules adjacentes et s'ouvre/se ferme en réponse à un signal de décharge d'équilibrage entre cellules transmis par le circuit de détection de tension de cellule/d'équilibrage entre cellules ; et
un circuit série qui est prédisposé entre une électrode positive de la batterie de cellule maintenue à un potentiel le plus haut et une électrode négative de la batterie de cellule maintenue à un potentiel le plus bas parmi les batteries de cellule, et est composé d'une résistance de décharge entre modules et d'un commutateur de décharge entre modules s'ouvrant/se fermant en réponse à un signal de décharge d'équilibrage entre modules transmis par le circuit d'équilibrage entre modules.

4. Système de batterie selon la revendication 1,
dans lequel chacune des batteries de module comprend en outre :
des circuits série, chacun desquels est prédisposé entre des lignes de détection de tension adjacentes réalisées à partir des deux extrémités des batteries de cellule et connectées au circuit de détection de tension de cellule/d'équilibrage entre cellules et est composé d'une résistance de décharge entre cellules et d'un commutateur de décharge entre cellules s'ouvrant/se fermant en réponse à un signal de décharge d'équilibrage entre cellules provenant du circuit de détection de tension de cellule/d'équilibrage entre cellules ; et
un circuit série qui est prédisposé entre une électrode positive de la batterie de cellule maintenue à un potentiel le plus haut et une électrode négative de la batterie de cellule maintenue à un potentiel le plus bas parmi les batteries de cellule, et est composé d'une résistance de décharge entre modules et d'un commutateur de décharge entre modules s'ouvrant/se fermant en réponse à un signal de décharge d'équilibrage entre modules transmis par le circuit d'équilibrage entre modules.

5. Système de batterie selon l'une ou l'autre des revendications 3 et 4,
dans lequel le circuit de détection de tension de cellule/d'équilibrage entre cellules de chacune des batteries de module détecte une valeur maximale et une valeur minimale de la tension de cellule de chacune des batteries de cellule et transmet la valeur maximale et la valeur minimale détectées de la tension de cellule de chacune des batteries de cellule comme un signal de tension de cellule à l'unité de gestion de batterie,
dans un cas où une valeur de différence entre la valeur maximale et la valeur minimale de la tension de cellule, qui sont indiquées par le signal de tension de cellule transmis par le circuit de détection de tension de cellule/d'équilibrage entre cellules de chacune des batteries de module, serait supérieure à une valeur de seuil prédéterminée, le circuit de contrôle d'équilibrage entre cellules de l'unité de gestion de batterie génère le signal de contrôle d'équilibrage entre cellules pour équilibrer les énergies entre les batteries de cellule dans chacune des batteries de module, et transmet le signal de contrôle d'équilibrage entre cellules au circuit de détection de tension de cellule/d'équilibrage entre cellules dans chacune des batteries de module, et
le circuit de détection de tension de cellule/d'équilibrage entre cellules transmet le signal de contrôle d'équilibrage entre cellules, qui est transmis par le circuit de contrôle d'équilibrage entre cellules, au commutateur de décharge entre cellules correspondant à la batterie de cellule dans laquelle la tension de cellule maximale est détectée, en déchargeant ainsi la batterie de cellule dans laquelle la tension de cellule maximale est détectée.

6. Système de batterie selon l'une ou l'autre des revendications 3 et 4,
dans lequel le circuit de détection de tension de cellule/d'équilibrage entre cellules de chacune des batteries de module détecte une valeur maximale et une valeur minimale de la tension de cellule de chacune des batteries de cellule et transmet la valeur maximale et la valeur minimale détectées de la tension de cellule comme un signal de tension de cellule à l'unité de gestion de batterie,
dans un cas où une valeur de différence entre la valeur maximale et la valeur minimale de la tension de cellule, qui sont indiquées par le signal de tension de cellule transmis par le circuit de détection de tension de cellule/d'équilibrage entre cellules de chacune des batteries de module, serait supérieure à une valeur de seuil prédéterminée, le circuit de contrôle d'équilibrage entre cellules de l'unité de gestion de batterie génère le signal de contrôle d'équilibrage entre cellules pour équilibrer les énergies entre les batteries de cellule dans chacune des batteries de module, et transmet le signal de contrôle d'équilibrage entre cellules au circuit de détection de tension de cellule/d'équilibrage entre cellules dans chacune des batteries de module, et
le circuit de détection de tension de cellule/d'équilibrage entre cellules transmet le signal de contrôle d'équilibrage entre cellules, qui est transmis par le circuit de contrôle d'équilibrage entre cellules, alternativement aux commutateurs de décharge entre cellules avec des nombres ordinaux impairs et aux commutateurs de décharge entre cellules avec des nombres ordinaux pairs, les commutateurs de décharge entre cellules avec les deux nombres ordinaux correspondant à la totalité des batteries de cellule dans chacune desquelles la valeur de différence entre la valeur maximale et la valeur minimale de la tension de cellule est supérieure à la valeur de seuil prédéterminée, en déchargeant ainsi les batteries de cellule dans chacune desquelles la valeur de différence entre la valeur maximale et la valeur minimale de la tension de cellule.

7. Système de batterie selon l'une ou l'autre des revendications 3 et 4,
dans lequel le circuit de détection de tension de celluleld'équilibrage entre cellules de chacune des batteries de module détecte une valeur maximale et une valeur minimale de la tension de cellule de chacune des batteries de cellule et transmet la valeur maximale et la valeur minimale détectées de la tension de cellule comme un signal de tension de cellule à l'unité de gestion de batterie,
dans un cas où une valeur de différence entre la valeur maximale et la valeur minimale de la tension de cellule, qui sont indiquées par le signal de tension de cellule transmis par le circuit de détection de tension de cellule/d'équilibrage entre cellules de chacune des batteries de module, serait supérieure à une valeur de seuil prédéterminée, le circuit de contrôle d'équilibrage entre cellules de l'unité de gestion de batterie génère le signal de contrôle d'équilibrage entre cellules pour équilibrer les énergies entre les batteries de cellule dans chacune des batteries de module, et transmet le signal de contrôle d'équilibrage entre cellules au circuit de détection de tension de cellule/d'équilibrage entre cellules dans chacune des batteries de module, et
le circuit de détection de tension de cellule/d'équilibrage entre cellules transmet le signal de contrôle d'équilibrage entre cellules, qui est transmis par le circuit de contrôle d'équilibrage entre cellules, aux commutateurs de décharge entre cellules correspondant à la totalité des batteries de cellule dans chacune desquelles la valeur de différence entre la valeur maximale et la valeur minimale de la tension de cellule est supérieure à la valeur de seuil prédéterminée, en déchargeant ainsi les batteries de cellule dans chacune desquelles la valeur de différence entre la valeur maximale et la valeur minimale de la tension de cellule est supérieure à la valeur de seuil prédéterminée.

8. Système de batterie selon l'une ou l'autre des revendications 3 et 4,
dans lequel le circuit de détection de tension de cellule/d'équilibrage entre cellules de chacune des batteries de module décharge les batteries de cellule en réponse au signal de contrôle d'équilibrage entre cellules transmis par le circuit de contrôle d'équilibrage entre cellules durant une période excluant une période de détection de la tension de cellule de chacune de batteries de cellule.

9. Système de batterie selon l'une ou l'autre des revendications 3 et 4,
dans lequel le circuit de détection de tension de cellule/d'équilibrage entre cellules de chacune des batteries de module décharge les batteries de cellule en réponse au signal de contrôle d'équilibrage entre cellules transmis par le circuit de contrôle d'équilibrage entre cellules durant une période excluant une période de détection de la tension de cellule de chacune de batteries de cellule et des périodes de marge prédéterminées avant et après la période de détection.

10. Système de batterie selon l'une ou l'autre des revendications 3 et 4,
dans lequel le circuit de détection de tension de cellule/d'équilibrage entre cellules de chacune des batteries de module détecte une valeur maximale et une valeur minimale de la tension de cellule de chacune des batteries de cellule et transmet la valeur maximale et la valeur minimale détectées de la tension de cellule comme un signal de tension de cellule à l'unité de gestion de batterie,
dans un cas où une valeur de différence entre la valeur minimale de la tension de cellule indiquée par le signal de tension de cellule transmis par le circuit de détection de tension de cellule/d'équilibrage entre cellules de chacune des batteries de module et une valeur minimale des tensions de cellule indiquées par les signaux de tension de cellule transmis par les circuits de détection de tension de cellule/d'équilibrage entre cellules de la totalité des batteries de module serait supérieure à une valeur de seuil prédéterminée, le circuit de contrôle d'équilibrage entre modules de l'unité de gestion de batterie génère le signal de contrôle d'équilibrage entre modules pour équilibrer les énergies entre les batteries de module, et transmet le signal de contrôle d'équilibrage entre modules aux circuits d'équilibrage entre modules dans les batteries de module, et
le circuit d'équilibrage entre modules transmet le signal de contrôle d'équilibrage entre modules, qui est transmis par le circuit de contrôle d'équilibrage entre modules, au commutateur de décharge entre modules, en déchargeant ainsi la batterie de module.

11. Système de batterie selon l'une ou l'autre des revendications 3 et 4,
dans lequel le circuit d'équilibrage entre modules transmet le signal de contrôle d'équilibrage entre modules, qui est transmis par le circuit de contrôle d'équilibrage entre modules, au commutateur de décharge entre modules indépendamment d'une période de détection de la tension de cellule de chacune des batteries de cellule dans le circuit de détection de tension de cellule/d'équilibrage entre cellules de chacune des batteries de cellule, en déchargeant ainsi la batterie de module.

12. Système de batterie dans lequel des batteries de module, chacune desquelles comprend des batteries de cellule connectées en série qui sont connectées entre elles, dans lequel chacune des batteries de module comprend :
un circuit de détection de tension de cellule/d'équilibrage entre cellules qui détecte une tension de cellule de chacune des batteries de cellule pour générer ensuite un signal de tension de cellule, et équilibre des énergies entre les batteries de cellule sur la base du signal de tension de cellule généré ; et
un circuit d'équilibrage entre modules qui équilibre des énergies entre les batteries de module sur la base d'une tension de module obtenue en additionnant les tensions de cellule des batteries de cellule.
